# EUROPEAN PATENT APPLICATION

(11) **EP 4 783 553 A1**
(43) Date of publication of application: **29.07.2026**
(21) Application number: 24881066.5
(22) Date of filing: 21.06.2024
(51) Int. Cl.: H04L 67/1074

(54) **COMMUNICATION METHOD AND APPARATUS, SYSTEM, AND STORAGE MEDIUM**

(30) Priority: 26.10.2023 CN 202311405956
(71) Applicant: HUAWEI TECHNOLOGIES CO., LTD., Shenzhen 518129 (CN)
(72) Inventor: HUA, Yu, Shenzhen, Guangdong 518129 (CN); CHEN, Haonan, Shenzhen, Guangdong 518129 (CN); LI, Bojie, Shenzhen, Guangdong 518129 (CN); MAO, Qiming, Shenzhen, Guangdong 518129 (CN); DING, Xiaoxiong, Shenzhen, Guangdong 518129 (CN)
(74) Representative: Pfenning, Meinig & Partner mbB
(86) International application number: PCT/CN2024/100792
(87) International publication number: WO 2025/086689

(57) **Abstract**

This application discloses a communication method, apparatus, and system, and a storage medium, relating to the communication field. The method is applied to a first device in the communication system, the communication system further includes a second device, the first device and the second device both include first metadata, the first metadata is used to describe at least one data category, and the at least one data category is a data category to which a data value that is able to be sent by the first device to the second device belongs. The method includes: The first device obtains a first data block based on the first metadata, where the first data block includes a data value that belongs to the at least one data category. The first device sends the first data block to the second device. The second device is configured to parse the first data block based on the first metadata, to obtain the data value. According to this application, data sending efficiency can be improved.

## Description

This application claims priority to Chinese Patent Application No. 202311405956.5, filed on October 26, 2023 and entitled "COMMUNICATION METHOD, APPARATUS, AND SYSTEM, AND STORAGE MEDIUM", which is incorporated herein by reference in its entirety.

### TECHNICAL FIELD

This application relates to the communication field, and in particular, to a communication method, an apparatus, a system, and a storage medium.

### BACKGROUND

Serialization is a process of converting data to be sent into a transmittable format. For example, for raw data to be sent at a transmitter, the transmitter serializes the raw data, to obtain metadata and target data. The metadata is used to describe an arrangement structure of the target data. A data block is sent to a receiver. The data block includes a block header of the data block, the metadata, and the target data. The block header includes an offset of the target data in the data block. The target data includes an offset of the metadata in the data block and the raw data.

The receiver receives the data block; extracts the target data in the data block based on the offset of the target data in the block header of the data block; extracts the metadata in the data block based on the offset of the metadata in the target data; and deserializes the target data based on the metadata, to obtain the raw data. It takes long time for the transmitter from obtaining the raw data to sending the data block, which reduces data sending efficiency.

### SUMMARY

This application provides a communication method, apparatus, and system, and a storage medium, to improve data sending efficiency. The technical solutions are as follows.

According to a first aspect, this application provides a communication system. The communication system includes a first device and a second device, the first device and the second device both include first metadata, the first metadata is used to describe at least one data category, and the at least one data category is a data category to which a data value that is able to be sent by the first device to the second device belongs. The first device is configured to obtain a first data block based on the first metadata, where the first data block includes a data value that belongs to the at least one data category. The first device is further configured to send the first data block to the second device. The second device is configured to parse the first data block based on the first metadata, to obtain the data value.

Because the first device and the second device each include the first metadata, and the first metadata includes the at least one data category, the first device obtains the first data block based on the first metadata, the first data block includes the data value that belongs to the at least one data category, and the first device sends the first data block to the second device. In this way, because the first data block includes the data value and does not need to include the first metadata, a data size of the first data block can be reduced. This improves efficiency of sending the first data block. In addition, because the first data block includes the data value and does not need to include the first metadata, and the data value does not need to be serialized. This reduces time for obtaining the first data block, and improves efficiency of sending the first data block.

In a possible implementation, the first metadata is further used to describe arrangement of a data value that is able to be sent by the first device to the second device, and arrangement of a data value included in the first data block is the arrangement of the data value. In this way, it is ensured that the second device can successfully obtain the data value through parsing.

In another possible implementation, the first metadata is metadata of the first device, and the first device is further configured to send the first metadata to the second device. The second device is further configured to receive the first metadata, to ensure that the first device and the second device each include the first metadata.

In another possible implementation, the first metadata is metadata of the second device, and the second device is further configured to send the first metadata to the first device. The first device is further configured to receive the first metadata, to ensure that the first device and the second device each include the first metadata.

In another possible implementation, a quantity of the at least one data category is M, M is an integer greater than or equal to 1, the first device further includes second metadata, the second metadata is metadata of the first device, the second metadata is used to describe N data categories, N is an integer greater than or equal to 1, and an intersection of the M data categories described by the first metadata and the N data categories includes Q data categories, where Q is an integer greater than or equal to 1, Q is less than or equal to N, and Q is less than or equal to M. The first device is further configured to obtain, based on the second metadata, N data values that belong to the N data categories. The first device is further configured to select, from the N data values based on the first metadata, Q data values that belong to the Q data categories, where the first data block includes M-Q default values that belong to M-Q data categories and the Q data values, and the M-Q data categories are data categories other than the Q data categories in the M data categories. In this way, it is ensured that the first data block includes the M data values, and a format of the first data block is the same as a format indicated by the first metadata, so that the second device can successfully parse the first data block based on the first metadata.

According to a second aspect, this application provides a communication method. The method is applied to a first device in a communication system, the communication system further includes a second device, the first device and the second device both include first metadata, the first metadata is used to describe at least one data category, and the at least one data category is a data category to which a data value that is able to be sent by the first device to the second device belongs. In the method, the first device obtains a first data block based on the first metadata, where the first data block includes a data value that belongs to the at least one data category. The first device sends the first data block to the second device, and the second device is configured to parse the first data block based on the first metadata, to obtain the data value.

Because the first device and the second device each include the first metadata, and the first metadata includes the at least one data category, the first device obtains the first data block based on the first metadata, the first data block includes the data value that belongs to the at least one data category, and the first device sends the first data block to the second device. In this way, because the first data block includes the data value and does not need to include the first metadata, a data size of the first data block can be reduced. This improves efficiency of sending the first data block. In addition, because the first data block includes the data value and does not need to include the first metadata, and the data value does not need to be serialized. This reduces time for obtaining the first data block, and improves efficiency of sending the first data block.

In a possible implementation, the first metadata is further used to describe arrangement of a data value that is able to be sent by the first device to the second device, and arrangement of a data value included in the first data block is the arrangement of the data value. In this way, it is ensured that the second device can successfully obtain the data value through parsing.

In another possible implementation, the first metadata is metadata of the first device, and the first device sends the first metadata to the second device, to ensure that the first device and the second device each include the first metadata.

In another possible implementation, the first metadata is metadata of the second device, and the first device receives the first metadata from the second device, to ensure that the first device and the second device each include the first metadata.

In another possible implementation, a quantity of the at least one data category is M, M is an integer greater than or equal to 1, the first device further includes second metadata, the second metadata is metadata of the first device, the second metadata is used to describe N data categories, N is an integer greater than or equal to 1, and an intersection of the M data categories described by the first metadata and the N data categories includes Q data categories, where Q is an integer greater than or equal to 1, Q is less than or equal to N, and Q is less than or equal to M. The first device obtains, based on the second metadata, N data values that belong to the N data categories. The first device selects, from the N data values based on the first metadata, Q data values that belong to the Q data categories, where the first data block includes M-Q default values that belong to M-Q data categories and the Q data values, and the M-Q data categories are data categories other than the Q data categories in the M data categories. In this way, it is ensured that the first data block includes the M data values, and a format of the first data block is the same as a format indicated by the first metadata, so that the second device can successfully parse the first data block based on the first metadata.

According to a third aspect, this application provides a communication method. The method is applied to a second device in a communication system, the communication system further includes a first device, the first device and the second device both include first metadata, the first metadata is used to describe at least one data category, and the at least one data category is a data category to which a data value that is able to be sent by the first device to the second device belongs. In the method, the second device receives a first data block, where the first data block includes a data value that belongs to the at least one data category. The second device parses the first data block based on the first metadata, to obtain the data value.

Because the first device and the second device each include the first metadata, and the first metadata includes the at least one data category, the first data block sent by the first device includes the data value that belongs to the at least one data category. In this way, because the first data block includes the data value and does not need to include the first metadata, a data size of the first data block can be reduced. This improves efficiency of sending the first data block by the first device. In addition, because the first data block includes the data value and does not need to include the first metadata, the first device does not need to serialize the data value, and the second device does not need to deserialize the first data block. This reduces time for the first device to obtain the first data block, improves efficiency of sending the first data block by the first device, and improves efficiency of parsing the first data block by the second device.

In a possible implementation, the first metadata is further used to describe arrangement of a data value that is able to be sent by the first device to the second device, and arrangement of a data value included in the first data block is the arrangement of the data value, to ensure that the second device can successfully obtain the data value by parsing the first data block.

In another possible implementation, the first metadata is metadata of the first device. The second device receives the first metadata from the first device, to ensure that the first device and the second device each include the first metadata.

In another possible implementation, the first metadata is metadata of the second device. The second device sends the first metadata to the first device, to ensure that the first device and the second device each include the first metadata.

In another possible implementation, a quantity of the at least one data category is M, M is an integer greater than or equal to 1, the first device further includes second metadata, the second metadata is metadata of the first device, the second metadata is used to describe N data categories, N is an integer greater than or equal to 1, an intersection of the N data categories and the M data categories includes Q data categories, Q is an integer greater than or equal to 1, Q is less than or equal to N, Q is less than or equal to M, the first data block includes M-Q default values that belong to M-Q data categories and Q data values that belong to the Q data categories, and the M-Q data categories are data categories other than the Q data categories in the M data categories. In this way, it is ensured that the first data block includes the M data values, and a format of the first data block is the same as a format indicated by the first metadata, so that the second device can successfully parse the first data block based on the first metadata.

According to a fourth aspect, this application provides a communication method. The method is applied to a first device, and the first device includes an object tree. In the method, a first node is obtained. The first node is a non-leaf node included in the object tree, the object tree further includes a second node, and the second node is a child node of the first node. First target data is added to a first data block. The first target data includes location information of the second node, metadata of the first node, and the first node, the metadata of the first node indicates a location of the first node in the first data block, the location information indicates a location of second target data in a second data block, the second target data includes metadata of the second node and the child node, and the second data block is a data block in which the second target data is located. When a data size of the first data block exceeds a data size threshold, the first data block is sent.

Because the first target data includes the location information of the second node (the child node of the first node), and the location information indicates the location of the second target data of the second node in the second data block, the second target data can be obtained from the second data block based on the location information, and the second node can be obtained based on the second target data. Therefore, the object tree may be sent based on a plurality of data blocks. In this way, when the data size of the first data block exceeds the data size threshold, the first data block may be sent. After the first data block is sent, a next data block may be obtained, and then the next data block is sent. In comparison with a manner in which data blocks including an entire object tree are obtained and then the data blocks including the entire object tree are sent, time required for obtaining the data blocks including the entire object tree is far greater than time required for obtaining the first data block, so that the first data block is sent when the data size of the first data block exceeds the data size threshold. This improves data sending efficiency.

In a possible implementation, when the data size of the first data block does not exceed the data size threshold, a third node is obtained, where the third node is a sibling node or a parent node of the first node. Third target data is added to the first data block, where the third target data includes metadata of the third node and the third node. When the data size of the first data block exceeds the data size threshold, the first data block is sent. In this way, when the data size of the first data block does not exceed the data size threshold, target data of a node in the object tree continues to be added to the first data block, so that the first data block is sent when the data size of the first data block exceeds the data size threshold. This avoids frequent sending of data blocks.

In another possible implementation, the metadata of the first node includes one or more of the following information: a data size of the first target data or an offset of the first target data in the first data block. In this way, it is ensured that the first node can be obtained by parsing the first data block based on the metadata.

In another possible implementation, the location information includes one or more of the following information: identification information of the second data block or an offset of the second target data in the second data block. In this way, it is ensured that the second node (the child node of the first node) can be obtained by parsing the second data block based on the location information.

In another possible implementation, the first data block includes a block header and a payload part, the block header includes the data size of the first data block, and the payload part includes the first target data.

In another possible implementation, the first node is a root node in the object tree, and the block header further includes the offset of the first target data in the first data block. In this way, it is ensured that the root node in the object tree can be obtained based on the offset.

In another possible implementation, a fourth node is obtained, where the fourth node is a node that is not sent in the object tree. A third data block is constructed, where a data size of a payload part in the third data block is 0. Fourth target data is added to the payload part in the third data block, where the fourth target data includes metadata of the fourth node and the fourth node. When a data size of the third data block exceeds the data size threshold, the third data block is sent. Therefore, the object tree can be sent based on a plurality of data blocks, and there is no need to wait for obtaining data blocks including the entire object tree, to improve data sending efficiency.

According to a fifth aspect, this application provides a communication method. The method is applied to a second device included in a communication system, and the communication system further includes a first device. The first device includes an object tree, the object tree includes a first node and a second node, and the second node is a child node of the first node. In the method, at least one data block sent by the first device is received. The at least one data block includes a first data block, the first data block includes first target data, and the first target data includes location information of the second node, metadata of the first node, and the first node. The metadata of the first node indicates a location of the first node in the first data block, the location information indicates a location of second target data in a second data block, the second target data includes metadata of the second node and the second node, the second data block is a data block in which the second target data is located, and the first data block is the second data block. Alternatively, the at least one data block further includes a second data block, and the second data block is a data block sent before the first device sends the first data block. The object tree is obtained based on the at least one data block.

Because the first target data includes the location information of the second node (the child node of the first node), and the location information indicates the location of the second target data of the second node in the second data block, so that the second device can obtain the second node from the second data block based on the location information. Therefore, the first device may send the object tree based on a plurality of data blocks. In this way, when a data size of the first data block exceeds a data size threshold, the first device may send the first data block. After the first data block is sent, a next data block may be obtained, and then the next data block is sent. In comparison with a manner in which data blocks including an entire object tree are obtained and then the data blocks including the entire object tree are sent, time required for obtaining the data blocks including the entire object tree is far greater than time required for obtaining the first data block, so that the first device sends the first data block when the data size of the first data block exceeds the data size threshold. This improves data sending efficiency of the first device.

In a possible implementation, the metadata of the first node includes one or more of the following information: a data size of the first target data or an offset of the first target data in the first data block. In this way, it is ensured that the first node can be obtained by parsing the first data block based on the metadata.

In another possible implementation, the location information includes one or more of the following information: identification information of the second data block or an offset of the second target data in the second data block.

In another possible implementation, the first node is a root node in the object tree, the first data block includes a block header and a payload part, the payload part includes the first target data, and the block header further includes the offset of the first target data in the first data block. The first target data is obtained from the first data block based on the offset included in the block header. The first node and the location information are obtained based on the first target data. The second target data is obtained from the second data block based on the location information. The second node is obtained based on the second target data. Therefore, the first device may send the object tree based on a plurality of data blocks, and does not need to wait for obtaining data blocks including the entire object tree, to improve data sending efficiency of the first device.

According to a sixth aspect, this application provides a communication apparatus, configured to perform the method in the second aspect or any possible implementation of the second aspect. Specifically, the apparatus includes a unit configured to perform the method in the second aspect or any possible implementation of the second aspect.

According to a seventh aspect, this application provides a communication apparatus, configured to perform the method in the third aspect or any possible implementation of the third aspect. Specifically, the apparatus includes a unit configured to perform the method in the third aspect or any possible implementation of the third aspect.

According to an eighth aspect, this application provides a communication apparatus, configured to perform the method in the fourth aspect or any possible implementation of the fourth aspect. Specifically, the apparatus includes a unit configured to perform the method in the fourth aspect or any possible implementation of the fourth aspect.

According to a ninth aspect, this application provides a communication apparatus, configured to perform the method in the fifth aspect or any possible implementation of the fifth aspect. Specifically, the apparatus includes a unit configured to perform the method in the fifth aspect or any possible implementation of the fifth aspect.

According to a tenth aspect, this application provides a communication apparatus, including at least one processor and a memory. The at least one processor is coupled to the memory, and is configured to read and execute instructions in the memory, to implement the method in the second aspect or any possible implementation of the second aspect.

According to an eleventh aspect, this application provides a communication apparatus, including at least one processor and a memory. The at least one processor is coupled to the memory, and is configured to read and execute instructions in the memory, to implement the method in the third aspect or any possible implementation of the third aspect.

According to a twelfth aspect, this application provides a communication apparatus, including at least one processor and a memory. The at least one processor is coupled to the memory, and is configured to read and execute instructions in the memory, to implement the method in the fourth aspect or any possible implementation of the fourth aspect.

According to a thirteenth aspect, this application provides a communication apparatus, including at least one processor and a memory. The at least one processor is coupled to the memory, and is configured to read and execute instructions in the memory, to implement the method in the fifth aspect or any possible implementation of the fifth aspect.

According to a fourteenth aspect, this application provides a computer program product. The computer program product includes a computer program stored in a computer-readable storage medium, and the computer program is loaded by a processor to implement the method in the second aspect or any possible implementation of the second aspect, the third aspect or any possible implementation of the third aspect, the fourth aspect or any possible implementation of the fourth aspect, or the fifth aspect or any possible implementation of the fifth aspect.

According to a fifteenth aspect, this application provides a computer-readable storage medium, configured to store a computer program. The computer program is loaded by a processor to perform the method in the second aspect or any possible implementation of the second aspect, the third aspect or any possible implementation of the third aspect, the fourth aspect or any possible implementation of the fourth aspect, or the fifth aspect or any possible implementation of the fifth aspect.

According to a sixteenth aspect, this application provides a chip, including a memory and a processor. The memory is configured to store computer instructions, and the processor is configured to invoke the computer instructions from the memory and run the computer instructions, to perform the method in the second aspect or any possible implementation of the second aspect, the third aspect or any possible implementation of the third aspect, the fourth aspect or any possible implementation of the fourth aspect, or the fifth aspect or any possible implementation of the fifth aspect.

### BRIEF DESCRIPTION OF DRAWINGS

FIG. 1 is a diagram of a structure of a communication system according to an embodiment of this application;
FIG. 2 is a diagram of a structure of an object tree according to an embodiment of this application;
FIG. 3 is a flowchart of a communication method according to an embodiment of this application;
FIG. 4 is a diagram of metadata of a first device according to an embodiment of this application;
FIG. 5 is a diagram of metadata of a second device according to an embodiment of this application;
FIG. 6 is a diagram of a structure of a first data block according to an embodiment of this application;
FIG. 7 is a diagram of a structure of another first data block according to an embodiment of this application;
FIG. 8 is a flowchart of another communication method according to an embodiment of this application;
FIG. 9 is a diagram of a structure of a data block according to an embodiment of this application;
FIG. 10 is a diagram of a structure of another data block according to an embodiment of this application;
FIG. 11 is a diagram of a structure of another data block according to an embodiment of this application;
FIG. 12 is a diagram of a structure of a communication apparatus according to an embodiment of this application;
FIG. 13 is a diagram of a structure of another communication apparatus according to an embodiment of this application;
FIG. 14 is a diagram of a structure of another communication apparatus according to an embodiment of this application;
FIG. 15 is a diagram of a structure of another communication apparatus according to an embodiment of this application;
FIG. 16 is a diagram of a structure of another communication apparatus according to an embodiment of this application; and
FIG. 17 is a diagram of a structure of another communication apparatus according to an embodiment of this application.

### DESCRIPTION OF EMBODIMENTS

The following further describes in detail embodiments of this application with reference to accompanying drawings.

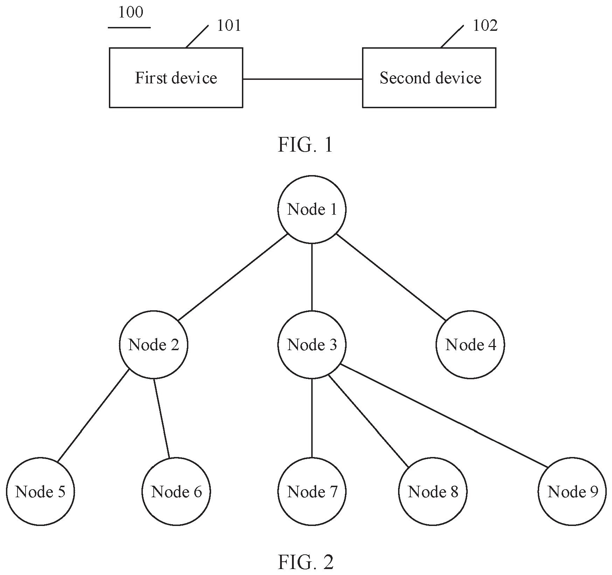

Refer to FIG. 1. An embodiment of this application provides a communication system 100. The communication system 100 includes a first device 101 and a second device 102. The first device 101 may communicate with the second device 102.

The following shows examples 1 and 2 of communication between the first device 101 and the second device 102. Certainly, there may be another example of communication between the first device 101 and the second device 102 other than the following examples 1 and 2. Examples are not enumerated in detail herein.

Example 1: The first device 101 may obtain at least one data value, and send a data block to the second device 102. The data block includes the at least one data value or some data values in the at least one data value.

In some embodiments, the first device 101 needs to synchronize, with the second device 102, the at least one data value or the some data values in the at least one data value obtained by the first device 101. Therefore, when obtaining the at least one data value, the first device 101 may send the data block to the second device 102, where the data block includes the at least one data value or the some data values in the at least one data value.

For example, the communication system 100 is used in a network game scenario, the first device 101 is a terminal device, and the second device 102 is a server. In other words, the terminal device may obtain at least one data value, and send a data block to the server. The data block includes the at least one data value or some data values in the at least one data value. Alternatively, the first device 101 is a server, and the second device 102 is a terminal device. In other words, the server may obtain at least one data value, and send a data block to the terminal device. The data block includes the at least one data value or some data values in the at least one data value.

In some embodiments, for the at least one data value obtained by the first device 101, at least one data category to which the at least one data value belongs may be a data category supported by the second device 102, and the data block sent by the first device 101 to the second device 102 includes the at least one data value. Alternatively, some data categories in at least one data category to which the at least one data value belongs may be data categories supported by the second device 102, and the data block sent by the first device 101 to the second device 102 includes the some data values in the at least one data value.

In some embodiments, the first device 101 may have metadata, the metadata of the first device 101 includes at least one data category supported by the first device 101, and the first device 101 may synchronize the metadata of the first device 101 with the second device 102. The second device 102 stores the metadata of the first device 101. In this way, the data value included in the data block sent by the first device 101 to the second device 102 belongs to a data category supported by the first device 101, and the second device 102 parses the data block based on the metadata of the first device 101, to obtain data included in the data block.

In some embodiments, the second device 102 may have metadata, and the metadata of the second device 102 includes at least one data category supported by the second device 102. The second device 102 may synchronize the metadata of the second device 102 with the first device 101, and the first device 101 stores the metadata of the second device 102. In this way, the data value included in the data block sent by the first device 101 to the second device 102 belongs to a data category supported by the second device 102. The second device 102 parses the data block based on the metadata of the second device 102, to obtain the data value included in the data block.

Example 2: The first device 101 may obtain a to-be-sent object tree. The object tree includes a plurality of nodes, and each node includes to-be-sent data. The first device 101 may traverse the object tree from a leaf node. Each time the first device 101 traverses a node, the first device 101 serializes the node to obtain target data, and adds the target data to a to-be-sent data block. When a data size of the data block does not exceed a data size threshold, the first device 101 continues to traverse the nodes in the object tree, serializes a traversed node to obtain target data, and continues to add the target data to the data block. Alternatively, when the data size of the data block exceeds the data size threshold, the first device 101 sends the data block to the second device 102. Then, the first device 101 constructs a new data block, where a data size of a payload part in the data block is 0. The first device 101 continues to traverse the nodes in the object tree, serializes a traversed node to obtain target data, and adds the target data to the data block. When a data size of the data block does not exceed the data size threshold, the first device 101 continues to traverse the nodes in the object tree, serializes a traversed node to obtain target data, and adds the target data to the data block. Alternatively, when the data size of the data block exceeds the data size threshold, the first device 101 sends the data block to the second device 102. The foregoing process is repeated until each node in the object tree is sent.

The second device 102 may receive the at least one data block from the first device 101, and obtain the object tree based on the at least one data block.

For example, FIG. 2 shows an object tree. The first device 101 traverses the object tree from a leaf node 5, and serializes the node 5 to obtain target data 1, and adds the target data 1 to a data block 1. The first device 101 traverses a leaf node 6 in the object tree, serializes the node 6 to obtain target data 2, and adds the target data 2 to the data block 1. The first device 101 traverses a node 2 in the object tree, serializes the node 2 to obtain target data 3, and adds the target data 3 to the data block 1. In this case, a data size of the data block 1 exceeds the data size threshold, and the first device 101 sends the data block 1 to the second device 102.

The first device 101 constructs a data block 2, traverses a leaf node 7 in the object tree, serializes the node 7 to obtain target data 4, and adds the target data 4 to the data block 2. The first device 101 traverses a node 8 in the object tree, serializes the node 8 to obtain target data 5, and adds the target data 5 to the data block 2. The first device 101 traverses a node 9 in the object tree, serializes the node 9 to obtain target data 6, and adds the target data 6 to the data block 2. In this case, a data size of the data block 2 exceeds the data size threshold, and the first device 101 sends the data block 2 to the second device 102.

The first device 101 constructs a data block 3, traverses a node 3 in the object tree, serializes the node 3 to obtain target data 7, and adds the target data 7 to the data block 3. The first device 101 traverses a node 4 in the object tree, serializes the node 4 to obtain target data 8, and adds the target data 8 to the data block 3. The first device 101 traverses a node 1 in the object tree, serializes the node 1 to obtain target data 9, and adds the target data 9 to the data block 3. The first device 101 sends the data block 3 to the second device 102.

The second device 102 receives the data block 1, the data block 2, and the data block 3, and obtains the object tree shown in FIG. 2 based on the data block 1, the data block 2, and the data block 3.

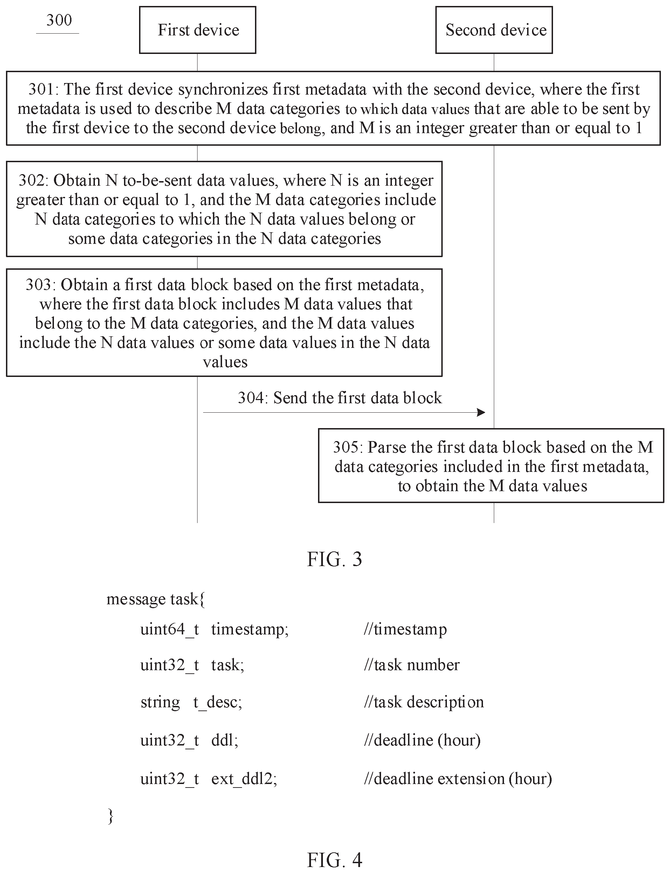

Refer to FIG. 3. An embodiment of this application provides a communication method 300. The method 300 is applied to the communication system 100 shown in FIG. 1, and the method 300 includes the following procedure.

Step 301: A first device synchronizes first metadata with a second device, where the first metadata is used to describe M data categories to which data values that are able to be sent by the first device to the second device belong, and M is an integer greater than or equal to 1.

The first metadata is metadata of the first device, or the first metadata is metadata of the second device. The first metadata includes the M data categories.

In some embodiments, the first metadata is metadata of the first device, and the first device sends the first metadata to the second device. The second device receives the first metadata, and stores the first metadata, so that the first device and the second device each include the first metadata.

For example, FIG. 4 shows the metadata of the first device, that is, the first metadata is the metadata shown in FIG. 4. The first metadata indicates five data categories supported by the first device. The five data categories are a timestamp (represented by timestamp in FIG. 4 and whose type is uint64_t), a task number (represented by task in FIG. 4 and whose type is uint32_t), a task description (represented by t_desc in FIG. 4 and whose type is string), a deadline (represented by ddl in a unit of hour in FIG. 4 and whose type is uint32_t), and deadline extension (represented by ext_ddl2 in a unit of hour in FIG. 4 and whose type is uint32_t). The first device sends the first metadata to the second device. The second device receives the first metadata, and stores the first metadata, so that the first device and the second device each include the first metadata shown in FIG. 4.

In some embodiments, the first metadata is metadata of the second device, and the first device receives the first metadata from the second device. The first device receives the first metadata, and stores the first metadata, so that the first device and the second device each include the first metadata.

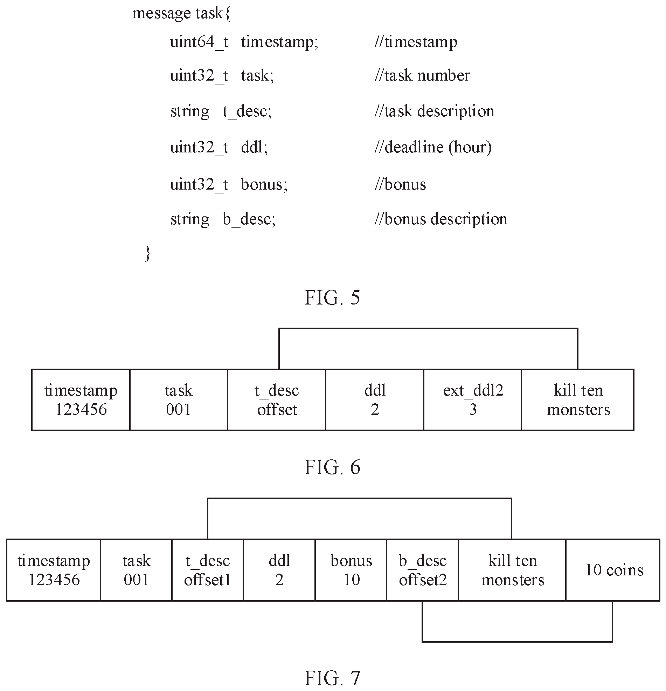

For example, FIG. 5 shows the metadata of the second device, that is, the first metadata is the metadata shown in FIG. 5. The first metadata indicates six data categories supported by the second device. The six data categories are a timestamp (represented by timestamp in FIG. 5 and whose type is uint64_t), a task number (represented by task in FIG. 5 and whose type is uint32_t), a task description (represented by t_desc in FIG. 5 and whose type is string), a deadline (represented by ddl in a unit of hour in FIG. 5 and whose type is uint32_t), a bonus (represented by bonus in FIG. 5 and whose type is uint32_t), and a bonus description (represented by b_desc in FIG. 5 and whose type is string) The second device sends the first metadata to the first device. The first device receives the first metadata, and stores the first metadata, so that the first device and the second device each include the first metadata shown in FIG. 5.

Because the first device and the second device each include the first metadata, the first device and the second device can both identify, based on the first metadata, M data values that belong to the M data categories. For any data category, one data value corresponding to the data category may include one sub-data value or a plurality of sub-data values. For example, for the data category "timestamp", a data value corresponding to the data category may include a moment, or a data value corresponding to the data category may include a plurality of different moments.

Step 302: The first device obtains N to-be-sent data values, where N is an integer greater than or equal to 1, and the M data categories include N data categories to which the N data values belong or some data categories in the N data categories.

The N data categories to which the N data values obtained by the first device belong are N data categories included in the metadata of the first device.

In step 302, the first device generates N data values based on the metadata of the first device, and the N data values are to-be-sent data values. Because the second device includes the first metadata, if the M data categories include the N data categories to which the N data values belong, it indicates that the second device can identify the N data values based on the first metadata. If the M data categories include the some data categories in the N data categories, it indicates that the second device can identify, based on the first metadata, some data values, in the N data values, that belong to the some data categories.

For example, N=5. The first device obtains five data values. It is assumed that the five data values include "123456", "001", "kill ten monsters", "2", and "3", where timestamp="123456", task="001", t_desc="kill ten monsters", ddl="2" hours, and ext_ddl2="3" hours. Five data categories to which the five data values belong include a timestamp, a task number, a task description, a deadline, and deadline extension, and the five data categories are the five data categories included in the metadata of the first device shown in FIG. 4.

In some embodiments, an intersection of the M data categories and the N data categories includes Q data categories, where Q is an integer greater than or equal to 1, Q is less than or equal to N, and Q is less than or equal to M.

In some embodiments, the first metadata is metadata of the first device, M=N=Q, and the M data categories are the same as the N data categories. Therefore, the Q data categories included in the intersection are the N data categories. For example, the first metadata is the metadata of the first device shown in FIG. 4, M=N=Q=5, and the M data categories, the N data categories, and the Q data categories each are the five data categories included in the first metadata.

In some embodiments, the first metadata is metadata of the second device. The M data categories may include the N data categories. Therefore, the Q data categories included in the intersection are the N data categories, and N=Q. Alternatively, in some embodiments, the M data categories may include the some data categories in the N data categories. Therefore, the Q data categories included in the intersection are the some data categories, and Q is less than N. The M data categories are the same as the some data categories, and Q=M; or the M data categories include a data category other than the some data categories, and Q is less than M. For example, the first metadata is the metadata of the second device shown in FIG. 5, the M data categories are the six data categories shown in FIG. 5, and the N data categories are the five data categories in the metadata of the first device shown in FIG. 4. The intersection of the M data categories and the N data categories includes four data categories, Q=4, and the Q data categories include a timestamp, a task number, a task description, and a deadline.

Step 303: The first device obtains a first data block based on the first metadata, where the first data block includes the M data values that belong to the M data categories, and the M data values include the N data values or some data values in the N data values.

In some embodiments, arrangement of the M data values in the first data block is the same as arrangement indicated by the first metadata, and the arrangement indicated by the first metadata is arrangement of data values that are able to be sent by the first device to the second device. Optionally, the arrangement is an arrangement order of the M data values in the first data block.

An arrangement order of the M data categories in the first metadata is the same as the arrangement order of the M data values in the first data block. In other words, the first device arranges, in the first data block based on the arrangement order of the M data categories in the first metadata, the M data values that belong to the M data categories.

In step 303, for an i^{th} data category in the first metadata, where i=1, 2, 3, ..., M, if the N data values include an i^{th} data value that belongs to the i^{th} data category, the i^{th} data value is obtained. If the N data values do not include a data value that belongs to the i^{th} data category, a default value corresponding to the i^{th} data category is used as an i^{th} data value. If a data size of the i^{th} data value does not exceed a specified threshold, the first device inserts the i^{th} data value into an i^{th} field of the first data block. If the data size of the i^{th} data value exceeds the specified threshold, the first device inserts the i^{th} data value into a field following an M^{th} field of the first data block, and inserts, into the i^{th} field of the first data block, an offset of the i^{th} data value in the first data block.

In some embodiments, the first metadata is the metadata of the first device, M=N, and the first data block obtained by the first device based on the first metadata includes the N data values.

For example, the first metadata is the metadata of the first device shown in FIG. 4. FIG. 6 shows the first data block obtained by the first device based on the first metadata shown in FIG. 4. The first data block includes five data values, and the five data values include "123456", "001", "kill ten monsters", "2", and "3".

During implementation, for a 1^{st} data category "timestamp" in the first metadata, the timestamp "123456" that belongs to "timestamp" is inserted into a 1^{st} field of the first data block. For a 2^{nd} data category "task" in the first metadata, the task number "001" that belongs to "task" is inserted into a 2^{nd} field of the first data block. For a 3^{rd} data category "t_desc" in the first metadata, when a data size of the task description "kill ten monsters" that belongs to "t_desc" exceeds a specified threshold, the task description "kill ten monsters" is inserted into a 6^{th} field of the first data block, and an offset "offset" of the task description "kill ten monsters" in the first data block is inserted into a 3^{rd} field of the first data block. For a 4^{th} data category "ddl" in the first metadata, the deadline "2" that belongs to "ddl" is inserted into a 4^{th} field of the first data block. For a 5^{th} data category "ext_ddl2" in the first metadata, the deadline extension "3" that belongs to "ext_ddl2" is inserted into a 5^{th} field of the first data block.

In some embodiments, the first metadata is the metadata of the second device, and the first data block obtained by the first device based on the first metadata includes M-Q default values that belong to M-Q data categories and the Q data values. The M-Q data categories are data categories other than the Q data categories in the M data categories, and the Q data values are data values that belong to the Q data categories in the N data values.

For example, the first metadata is the metadata of the second device shown in FIG. 5. FIG. 7 shows the first data block obtained by the first device based on the first metadata shown in FIG. 5. The first data block includes six data values, and the six data values include "123456", "001", "kill ten monsters", "2", "10", and "10 coins".

During implementation, for a 1^{st} data category "timestamp" in the first metadata, the timestamp "123456" that belongs to "timestamp" is inserted into a 1^{st} field of the first data block. For a 2^{nd} data category "task" in the first metadata, the task number "001" that belongs to "task" is inserted into a 2^{nd} field of the first data block. For a 3^{rd} data category "t_desc" in the first metadata, when a data size of the task description "kill ten monsters" that belongs to "t_desc" exceeds a specified threshold, the task description "kill ten monsters" is inserted into a 6^{th} field of the first data block, and an offset "offset1" of the task description "kill ten monsters" in the first data block is inserted into a 3^{rd} field of the first data block. For a 4^{th} data category "ddl" in the first metadata, the deadline "2" that belongs to "ddl" is inserted into a 4^{th} field of the first data block.

For a 5^{th} data category "bonus" in the first metadata, the six data values do not include a data value that belongs to the 5^{th} data category "bonus", a default value corresponding to the 5^{th} data category "bonus" is obtained as a bonus "10", and the bonus "10" that belongs to the 5^{th} data category "bonus" is inserted into a 5^{th} field of the first data block. For a 6^{th} data category "b_desc" in the first metadata, the six data values do not include a data value that belongs to the 6^{th} data category "b_desc", and a default value that belongs to the 6^{th} data category "b_desc" is obtained as a bonus description "10 coins". When a data size of the bonus description "10 coins" exceeds the specified threshold, the bonus description "10 coins" that belongs to the 6^{th} data category "b_desc" is inserted into a 7^{th} field of the first data block, and an offset "offset2" of the bonus description "10 coins" in the first data block is inserted into a 6^{th} field of the first data block.

Step 304: The first device sends the first data block to the second device.

Step 305: The second device receives the first data block, and parses the first data block based on the M data categories included in the first metadata, to obtain the M data values.

In some embodiments, the first metadata is further used to describe arrangement of the M data values included in the first data block, and the second device parses the first data block based on the M data categories and the arrangement, to obtain the M data values.

In step 305, for a j^{th} data category in the first metadata, where j=1, 2, 3, ..., M, if a j^{th} field of the first data block includes a data value that belongs to the j^{th} data category, the second device reads the data value that belongs to the j^{th} data category from the j^{th} field of the first data block. If the j^{th} field of the first data block includes an offset of the data value that belongs to the j^{th} data category in the first data block, the second device reads, from the first data block based on the offset, the data value that belongs to the j^{th} data category.

In some embodiments, for the M data values, the second device further selects at least one data value from the M data values based on the metadata of the second device, and processes the at least one data value. At least one data category to which the at least one data value belongs is a data category in the metadata of the second device.

For example, the first metadata is shown in FIG. 4, and the second device receives the first data block shown in FIG. 6. For the 1^{st} data category "timestamp" in the first metadata, the second device reads the timestamp "123456" that belongs to "timestamp" from the 1^{st} field of the first data block. For the 2^{nd} data category "task" in the first metadata, the second device reads the task number "001" that belongs to "task" from the 2^{nd} field of the first data block.

For the 3^{rd} data category "t_desc" in the first metadata, the 3^{rd} field of the first data block includes the offset "offset", in the first data block, of the data value that belongs to the data category "t_desc". The second device reads the offset "offset" from the 3^{rd} field of the first data block, and reads, from the first data block based on the offset "offset", the task description "kill ten monsters" that belongs to "t_desc".

For the 4^{th} data category "ddl" in the first metadata, the second device reads the deadline "2" that belongs to "ddl" from the 4^{th} field of the first data block. For the 5^{th} data category "ext_ddl2" in the first metadata, the second device reads the deadline extension "3" that belongs to "ext_ddl2" from the 5^{th} field of the first data block.

In this way, the second device obtains five data values through parsing. The five data values include "123456", "001", "kill ten monsters", "2", and "3". The metadata of the second device is shown in FIG. 5. The second device selects "123456", "001", "kill ten monsters", and "2" from the five data values based on the metadata of the second device, and processes "123456", "001", "kill ten monsters", and "2".

For example, the first metadata is shown in FIG. 5, and the second device receives the first data block shown in FIG. 7. For the 1^{st} data category "timestamp" in the first metadata, the second device reads the timestamp "123456" that belongs to "timestamp" from the 1^{st} field of the first data block. For the 2^{nd} data category "task" in the first metadata, the second device reads the task number "001" that belongs to "task" from the 2^{nd} field of the first data block.

For the 3^{rd} data category "t_desc" in the first metadata, the 3^{rd} field of the first data block includes the offset "offset1", in the first data block, of the data value that belongs to the data category "t_desc". The second device reads the offset "offset1" from the 3^{rd} field of the first data block, and reads, from the first data block based on the offset "offset1", the task description "kill ten monsters" that belongs to "t_desc".

For the 4^{th} data category "ddl" in the first metadata, the second device reads the deadline "2" that belongs to "ddl" from the 4^{th} field of the first data block. For the 5^{th} data category "bonus" in the first metadata, the second device reads the bonus "10" that belongs to "bonus" from the 5^{th} field of the first data block.

For the 6^{th} data category "b_desc" in the first metadata, the 6^{th} field of the first data block includes the offset "offset2", in the first data block, of the data value that belongs to the data category "b_desc". The second device reads the offset "offset2" from the 6^{th} field of the first data block, and reads, from the first data block based on the offset "offset2", the bonus description "10 coins" that belongs to "b_desc".

In this way, the second device obtains six data values through parsing. The six data values include "123456", "001", "kill ten monsters", "2", "10", and "10 coins". The metadata of the second device is shown in FIG. 5. The second device selects "123456", "001", "kill ten monsters", "2", "10", and "10 coins" from the six data values based on the metadata of the second device, and processes "123456", "001", "kill ten monsters", "2", "10", and "10 coins".

In this embodiment of this application, the first device and the second device first synchronize the first metadata, and the first metadata includes the M data categories. Therefore, when obtaining the N data values, the first device obtains the first data block based on the first metadata, the first data block includes the M data values that belong to the M data categories, and the M data values include the N data values or some data values in the N data values. The first device sends the first data block to the second device. Because the first data block includes the M data values and does not need to include the first metadata, a data size of the first data block can be reduced. This improves efficiency of sending the first data block, and reduces bandwidth resources occupied by sending of the first data block. Because the first data block includes the M data values and does not need to include the first metadata, and serialization does not need to be performed. This reduces time for obtaining the first data block, and improves efficiency of sending the first data block.

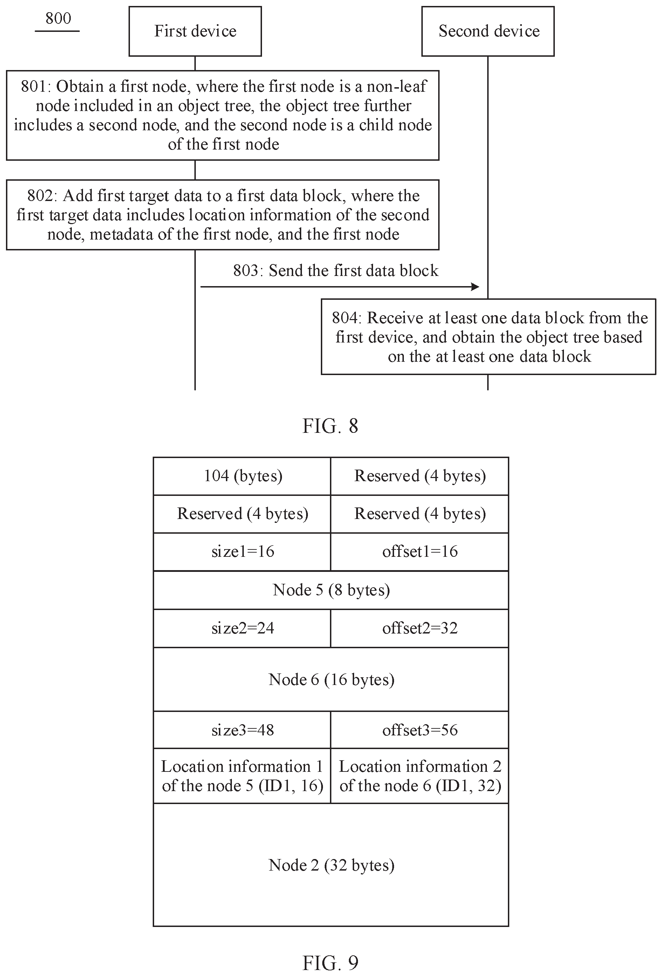

Refer to FIG. 8. An embodiment of this application provides a communication method 800. The method 800 is applied to the communication system 100 shown in FIG. 1, and the first device in the communication system 100 includes a to-be-sent object tree. The method 800 includes the following procedure.

Step 801: The first device obtains a first node, where the first node is a non-leaf node included in the object tree, the object tree further includes a second node, and the second node is a child node of the first node.

The non-leaf node is a node other than a leaf node in the object tree.

In this embodiment of this application, the first device traverses the object tree from a lower-layer node to an upper-layer node, and each time the first device traverses a node, the first device obtains target data of the node, and adds the target data to a current data block.

In other words, the first device traverses the object tree from a leaf node, and each time the first device traverses a node, the first device serializes the node to obtain target data of the node, and adds the target data of the node to a data block. The target data of the node includes metadata of the node and the node, and the metadata of the node indicates a location of the node in the data block. The foregoing process is repeated until a data size of the data block exceeds a data size threshold. In this case, the first device sends the data block to a second device.

The first device continues to traverse nodes, and each time the first device traverses a node, the first device serializes the node to obtain target data of the node, and adds the target data of the node to a new data block. The target data of the node includes metadata of the node and the node, and the metadata of the node indicates a location of the node in the new data block. The foregoing process is repeated until a data size of the new data block exceeds the data size threshold. In this case, the first device sends the new data block to the second device.

The foregoing process is repeated. Target data of each node in the object tree may be sent based on a plurality of data blocks until a data block in which target data of a last node (a root node in the object tree) in the object tree is located is sent.

The first device includes a buffer space. For any data block, the data block is data stored in the buffer space, and sending the data block is essentially sending the data block in the buffer space. Each time a data block in the buffer space is sent, data newly stored in the buffer space is referred to as a new data block.

For any node in the data block, target data of the node includes metadata of the node and the node, and the metadata of the node indicates a location of the node in the data block. Optionally, the metadata of the node includes one or more of the following data: a data size of the target data of the node, an offset of the target data of the node in the data block, or the like.

In some embodiments, when the node is a parent node of at least one child node, the target data of the node further includes location information of the at least one child node. For each child node, for ease of description, the child node is referred to as a second node. Location information of the second node indicates a data block in which target data of the second node is located and a location of the target data of the second node in the data block.

The location information of the second node includes one or more of the following information: identification information of the data block in which the target data of the second node is located, an offset of the target data of the second node in the data block, or the like.

In some embodiments, the following shows an example in which the first device traverses the object tree. Certainly, there is another example in which the first device traverses the object tree. Examples are not enumerated herein. A procedure of the example is as follows:

1. The first device traverses at least one leaf node in the object tree, where the at least one leaf node is a child node of a same parent node.

Each time the first device traverses a leaf node, the first device adds target data of the leaf node to a current data block.

The target data includes metadata of the leaf node and the leaf node, and the metadata of the leaf node indicates a location of the leaf node in the data block.

In some embodiments, when starting traversal, the first device may first construct a data block, where a payload of the data block is empty, and the current data block is the constructed data block; serialize the traversed leaf node to obtain target data of the leaf node; and add the target data of the leaf node to the data block. When a data size of the data block exceeds the data size threshold, the first device sends the data block to the second device. Then, the first device constructs a new data block, and adds target data of another traversed leaf node to the new data block. When a data size of the data block does not exceed the data size threshold, the first device adds target data of another traversed leaf node to the data block.

Optionally, the first device includes a buffer space, and data stored in the buffer space is a data block. Construction of the data block means that a block header of the data block is stored in the buffer space, and a payload of the data block is empty. Addition of the target data of the leaf node to the data block means addition of the target data of the leaf node to the buffer space.

For example, refer to the object tree shown in FIG. 2. The first device traverses the node 5 and the node 6 in the object tree, where the node 5 and the node 6 are both leaf nodes, and a parent node of both the node 5 and the node 6 is a node 2. Refer to FIG. 9. When traversing the node 5, the first device serializes the node 5 to obtain target data of the node 5, and adds the target data of the node 5 to a current data block. The target data includes metadata of the node 5 and the node 5, and the metadata of the node 5 includes a data size size1 of the target data of the node 5 and an offset offset1 of the target data in the data block. It is assumed that, in the data block, a field with a length of 4 bytes is required to include the data size size1 of the target data of the node 5, and another field with a length of 4 bytes is required to include the offset offset1 of the target data in the data block. It is further assumed that size1=16 bytes, offset1=16 bytes, and the data size of the node 5 is 8 bytes.

Refer to FIG. 9. The data block is data stored in the buffer space of the first device, and the data block includes a block header and a payload part. It is assumed that the block header includes four fields, and a length of each field is 4 bytes. A 1^{st} field includes a current data size (32 bytes) of the data block, and the other three fields are reserved fields. The payload part includes the target data of the node 5.

When traversing the node 6, the first device serializes the node 6 to obtain target data of the node 6, and adds the target data of the node 6 to the current data block. The target data includes metadata of the node 6 and the node 6. The metadata of the node 6 includes a data size size2 of the target data of the node 6 and an offset offset2 of the target data in the data block, where offset2=32 bytes. It is assumed that size2=24 bytes, and a data size of the node 6 is 16 bytes. In this case, the data size of the data block is 56 bytes, and the first device further updates the data size (32 bytes), included in the block header of the data block, of the data block to 56 bytes.

2. The first device traverses the parent node of the at least one leaf node, to obtain the first node, where the first node is the parent node.

Step 802: The first device adds first target data to a first data block, where the first target data includes the location information of the second node, metadata of the first node, and the first node.

The metadata of the first node indicates a location of the first node in the first data block, the location information of the second node indicates a location of second target data in a second data block, the second target data includes metadata of the second node and the second node, and the second data block is a data block in which the second target data is located.

The first data block is data stored in the buffer space of the first device, that is, the first data block is a data block that has not been sent currently. The first data block and the second data block may be a same data block, or the second data block is a data block sent last time, and the first data block and the second data block are different data blocks.

The location information of the second node includes one or more of the following information: identification information of the second data block, or an offset of the second target data in the second data block.

For example, the first node is the node 2, and the first data block is the data block shown in FIG. 9. For the operation 2 in the foregoing traversal example, when traversing the parent node 2 of the at least one leaf node (the node 5 and the node 6), the first device adds the first target data to the data block. The first target data is target data of the node 2, and the first target data includes location information of the two child nodes of the node 2, metadata of the node 2, and the node 2.

The data block in which the target data of the node 2 is located is the same as the data block in which the target data of the two child nodes of the node 2 is located. The location information of the two child nodes of the node 2 includes location information 1 of the node 5 and location information 2 of the node 6. It is assumed that a field whose length is 4 bytes is required to include the location information 1 of the node 5, and another field with a length of 4 bytes is required to include the location information 2 of the node 6. The location information 1 of the node 5 includes identification information "ID1" of the data block in which the target data of the node 5 is located, and an offset of the target data of the node 5 in the data block being 16. The location information 2 of the node 6 includes identification information "ID1" of the data block in which the target data of the node 6 is located, and an offset of the target data of the node 6 in the data block being 32.

The metadata of the node 2 includes a data size size3 of the target data of the node 2 and an offset offset3 of the target data in the data block, where offset3=56 bytes. It is assumed that size3=48 bytes, and a data size of the node 2 is 32 bytes. In this case, the data size of the data block is 104 bytes, and the first device further updates the data size (56 bytes), included in the block header of the data block, of the data block to 104 bytes.

Step 803: When a data size of the first data block exceeds the data size threshold, the first device sends the first data block to the second device.

For example, for the data block shown in FIG. 9, it is assumed that the data size threshold is 100 bytes, and a data size of the data block shown in FIG. 9 is 104 bytes, which exceeds the data size threshold. Therefore, the first device sends the data block shown in FIG. 9 to the second device.

In some embodiments, when the data size of the first data block does not exceed the data size threshold, the first device obtains the second node, where the second node is a sibling node or a parent node of the first node; adds third target data to the first data block, where the third target data includes the metadata of the second node and the second node; and when the data size of the first data block exceeds the data size threshold, sends the first data block.

In some embodiments, the first node is a root node in the object tree, a block header of the first data block further includes an offset of the first target data in the first data block. In this case, the first device sends all nodes in the object tree, and ends the procedure.

In some embodiments, the first node is not a root node in the object tree. After sending of the first data block to the second device is completed, if there is an unsent node in the object tree, the first device obtains a fourth node, where the fourth node is the unsent node in the object tree; constructs a third data block, where a data size of a payload part in the third data block is 0; adds fourth target data to the payload part in the third data block, where the fourth target data includes metadata of the fourth node and the fourth node; and when a data size of the third data block exceeds the data size threshold, sends the third data block. The foregoing process is repeated until all nodes in the object tree are sent.

For example, for the foregoing example of traversing the object tree, the example further includes the following operations.

3. The first device determines whether the first node is a root node in the object tree; and if the first node is not a root node in the object tree, performs operation 4; or if the first node is a root node in the object tree, ends traversal.

If the first node is the root node in the object tree, the first device adds target data of the first node to a current data block, and adds an offset of the target data of the first node in the data block to a block header of the data block.

4. The first device obtains a third node, where the third node is a sibling node of the first node, and the third node is a non-leaf node; and traverses at least one leaf node, where the at least one leaf node is a leaf node existing on the third node.

Each time the first device traverses a leaf node, the first device adds target data of the node to a current data block. Then, the first device determines whether a data size of the data block exceeds the data size threshold. If the data size of the data block exceeds the data size threshold, the first device sends the data block, and constructs a new data block whose payload is empty. Then, the first device adds target data of another traversed leaf node to the new data block. If a data size of the data block does not exceed the data size threshold, the first device adds target data of another traversed leaf node to the data block.

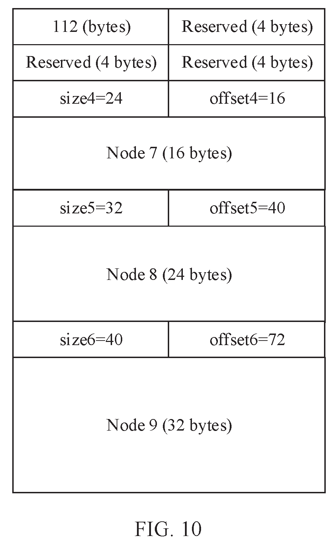

For example, for the object tree shown in FIG. 2, the first node is the node 2, and sibling nodes of the node 2 include the node 3 and the node 4. In other words, the third node may be the node 3, and leaf nodes existing on the node 3 include the node 7, the node 8, and the node 9. The first device traverses the node 7, constructs a new data block, and adds target data of the node 7 to the new data block. As shown in FIG. 10, the target data includes metadata of the node 7 and the node 7, and the metadata of the node 7 includes a data size size4 of the target data of the node 7 and an offset offset4 of the target data in the data block. It is assumed that size4=24 bytes, offset4=16 bytes, and a data size of the node 7 is 16 bytes. In this case, a block header of the data block includes a data size of the data block being 40 bytes.

When traversing the node 8, the first device serializes the node 8 to obtain target data of the node 8, and adds the target data of the node 8 to the current data block. The target data includes metadata of the node 8 and the node 8. The metadata of the node 8 includes a data size size5 of the target data of the node 8 and an offset offset5 of the target data in the data block, where offset5=40 bytes. It is assumed that size5=32 bytes, and a data size of the node 8 is 24 bytes. In this case, the data size of the data block is 72 bytes, and the first device further updates the data size (40 bytes), included in the block header of the data block, of the data block to 72 bytes.

When traversing the node 9, the first device serializes the node 9 to obtain target data of the node 9, and adds the target data of the node 9 to the current data block. The target data includes metadata of the node 9 and the node 9. The metadata of the node 9 includes a data size size6 of the target data of the node 9 and an offset offset6 of the target data in the data block, where offset6=72 bytes. It is assumed that size6=40 bytes, and a data size of the node 9 is 32 bytes. In this case, the data size of the data block is 112 bytes, and the first device further updates the data size (72 bytes), included in the block header of the data block, of the data block to 112 bytes. In addition, the current data size of the data block is 112 bytes, which exceeds the data size threshold of 100 bytes. Therefore, the first device further sends the data block to the second device, and constructs a new data block.

5. The first device traverses the parent node of the at least one leaf node, where the third node is the parent node.

When the first device traverses the parent node, that is, traverses the third node, the first device adds target data of the third node to a current data block.

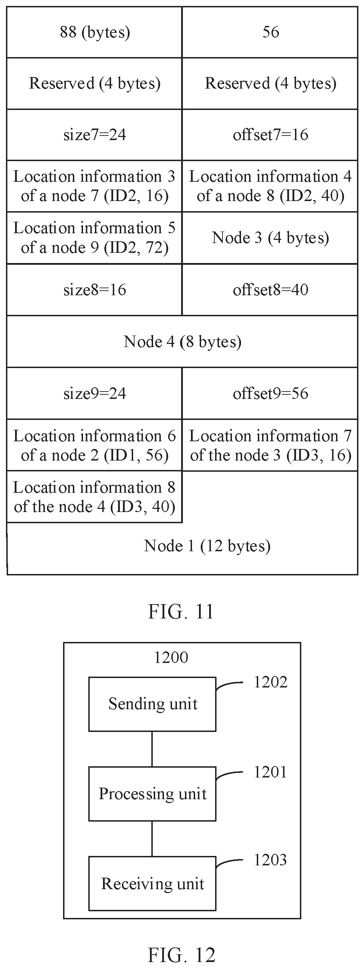

For example, a parent node of the node 7, the node 8, and the node 9 is the node 3. The first device traverses the node 3, and adds target data of the node 3 to the new data block. Refer to FIG. 11. The target data includes location information of the three child nodes of the node 3, metadata of the node 3, and the node 3.

The location information of the three child nodes of the node 3 includes location information 3 of the node 7, location information 4 of the node 8, and location information 5 of the node 9. The location information 3 of the node 7 includes identification information "ID2" of the data block (the data block shown in FIG. 10) in which the target data of the node 7 is located and the offset of the target data of the node 7 in the data block being 16. The location information 4 of the node 8 includes identification information "ID2" of the data block (the data block shown in FIG. 10) in which the target data of the node 8 is located and the offset of the target data of the node 8 in the data block being 40. The location information 5 of the node 9 includes identification information "ID2" of the data block (the data block shown in FIG. 10) in which the target data of the node 9 is located and the offset of the target data of the node 9 in the data block being 72.

The metadata of the node 3 includes a data size size7 of the target data of the node 3 and an offset offset7 of the target data in the data block, where offset7=16 bytes. It is assumed that size7=24 bytes, and a data size of the node 3 is 4 bytes. In this case, the data size of the data block is 40 bytes, that is, the data size, included in the block header of the data block, of the data block is 40 bytes.

After traversing the node 3, the first device further traversing the other sibling node of the node 2, where the other sibling node is the node 4. Because the node 4 does not have a child node, the first device serializes the node 4 to obtain target data of the node 4, and adds the target data of the node 4 to the current data block. The target data includes metadata of the node 4 and the node 4. The metadata of the node 4 includes a data size size8 of the target data of the node 4 and an offset offset8 of the target data in the data block, where offset8=40 bytes. It is assumed that size8=16 bytes, and a data size of the node 4 is 8 bytes. In this case, the data size of the data block is 56 bytes, and the first device further updates the data size (40 bytes), included in the block header of the data block, of the data block to 56 bytes.

6. The first device traverses the first node and a parent node of the third node, and returns to perform the operation 3, where the parent node is referred to as the first node.

For example, a parent node of the node 2, the node 3, and the node 4 is the node 1, and the node 1 is a root node. Target data of the node 1 is added to the data block shown in FIG. 11, the target data of the node 1 includes location information of the three child nodes of the node 1, metadata of the node 1, and the node 1, and an offset of the target data of the node 1 in the data block is added to a reserved field in the data block, where the offset is 56.

The location information of the three child nodes of the node 1 includes location information 6 of the node 2, location information 7 of the node 3, and location information 8 of the node 4. The location information 6 of the node 2 includes identification information "ID1" of the data block (the data block shown in FIG. 11) in which the target data of the node 2 is located and the offset of the target data of the node 2 in the data block being 56. The location information 7 of the node 3 includes identification information "ID3" of the data block (the data block shown in FIG. 11) in which the target data of the node 3 is located and the offset of the target data of the node 3 in the data block being 16. The location information 8 of the node 4 includes identification information "ID3" of the data block (the data block shown in FIG. 11) in which the target data of the node 4 is located and the offset of the target data of the node 4 in the data block being 40.

The metadata of the node 1 includes a data size size9 of the target data of the node 1 and an offset offset9 of the target data in the data block, where offset9=56 bytes. It is assumed that size9=32 bytes, and a data size of the node 1 is 12 bytes. In this case, the data size of the data block is 88 bytes, that is, the data size of 56 bytes, included in the block header of the data block, of the data block is updated to 88 bytes. Then, the first device sends the data block shown in FIG. 11 to the second device.

Step 804: The second device receives the at least one data block from the first device, and obtains the object tree based on the at least one data block.

In step 804, the following operations 8041 to 8045 may be performed.

8041: The second device identifies a data block that includes the root node from the plurality of data blocks, and obtains target data of the root node from the data block based on an offset, included in a block header of the data block, of the target data of the root node.

The block header, of the data block, that includes the root node includes the offset of the target data of the root node, so that a data block whose block header includes the offset is identified as the data block that includes the root node.

For example, the second device receives the three data blocks shown in FIG. 9, FIG. 10, and FIG. 11, and identifies a data block, shown in FIG. 11, that includes a root node 1 from the three data blocks. A block header of the data block shown in FIG. 11 includes an offset 56, and target data of the root node 1 is obtained based on the offset 56.

8042: The second device obtains the root node and location information of a child node of the root node based on the target data of the root node.

In some embodiments, the target data of the root node includes the location information of the child node of the root node, metadata of the root node, and the root node, and the metadata of the root node includes a data size of the target data of the root node and an offset of the target data of the root node. If the offset in the metadata is the same as the offset in the block header, the second device obtains the root node and the location information of the child node of the root node from the target data of the root node based on the data size of the target data of the root node.

For example, the data block shown in FIG. 11 includes location information of three child nodes of the root node 1, metadata of the root node 1, and the root node 1. The metadata of the root node 1 includes a data size size9=24 of the target data of the root node and the offset offset9=56 of the target data of the root node. The offset in the metadata is the same as the offset in the block header. The second device obtains the root node and the location information of the three child nodes of the root node from the target data of the root node based on the data size size9 of the target data of the root node. The location information of the three child nodes includes the location information 6 of the node 2, the location information 7 of the node 3, and the location information 8 of the node 4.

8043: The second device refers to the child node as a fifth node, and obtains, based on location information of the fifth node, target data of the fifth node from a data block in which the fifth node is located.

8044: The second device obtains the fifth node based on the target data of the fifth node.

For example, for the location information 6 of the node 2, the location information 6 of the node 2 includes the identification information "ID1" of the data block shown in FIG. 9 and the offset 56 of the target data of the node 2 in the data block shown in FIG. 9. The target data of the node 2 is obtained, based on the offset 56, from the data block shown in FIG. 9. The target data of the node 2 includes the location information of the two child nodes of the node 2, the metadata of the node 2, and the node 2. The metadata of the node 2 includes the data size size3=48 and the offset offset3=56 of the target data of the node 2. The offset in the location information 6 is the same as the offset offset3 in the target data. The second device obtains the node 2 and the location information of the two child nodes of the node 2 from the target data of the node 2 based on the data size size3 of the target data of the node 2. The location information of the two child nodes includes the location information 1 of the node 5 and the location information 2 of the node 6.

For the location information 7 of the node 3, the location information 7 of the node 3 includes the identification information "ID3" of the data block shown in FIG. 11 and the offset 16 of the target data of the node 3 in the data block shown in FIG. 11. The target data of the node 3 is obtained, based on the offset 16, from the data block shown in FIG. 11. The target data of the node 3 includes the location information of the three child nodes of the node 3, the metadata of the node 3, and the node 3. The metadata of the node 3 includes the data size size7=24 and the offset offset7=16 of the target data of the node 3. The offset in the location information 7 is the same as the offset offset7 in the target data. The second device obtains the node 3 and the location information of the three child nodes of the node 3 from the target data of the node 3 based on the data size size7 of the target data of the node 3. The location information of the three child nodes includes the location information 3 of the node 7, the location information 4 of the node 8, and the location information 5 of the node 9.

For the location information 8 of the node 4, the location information 8 of the node 4 includes the identification information "ID3" of the data block shown in FIG. 11 and the offset 40 of the target data of the node 4 in the data block shown in FIG. 11. The target data of the node 4 is obtained, based on the offset 40, from the data block shown in FIG. 11. The target data of the node 4 includes the metadata of the node 4 and the node 4. The metadata of the node 4 includes the data size size8=16 and the offset offset8=40 of the target data of the node 4. The offset in the location information 8 is the same as the offset offset8 in the target data. The second device obtains the node 4 from the target data of the node 4 based on the data size size8 of the target data of the node 4.

8045: If the target data of the fifth node further includes location information of a child node of the fifth node, the child node is referred to as a fifth node, and 8043 is performed.

For example, for the location information 1 of the node 5, the location information 1 of the node 5 includes the identification information "ID1" of the data block shown in FIG. 9 and the offset 16 of the target data of the node 5 in the data block shown in FIG. 9. The target data of the node 5 is obtained, based on the offset 16, from the data block shown in FIG. 9. The target data of the node 5 includes the metadata of the node 5 and the node 5. The metadata of the node 5 includes the data size size1=16 and the offset offset1=16 of the target data of the node 5. The offset in the location information 1 is the same as the offset offset1 in the target data. The second device obtains the node 2 from the target data of the node 5 based on the data size size1 of the target data of the node 5.

For the location information 2 of the node 6, the location information 2 of the node 6 includes the identification information "ID1" of the data block shown in FIG. 9 and the offset 32 of the target data of the node 6 in the data block shown in FIG. 9. The target data of the node 6 is obtained, based on the offset 32, from the data block shown in FIG. 9. The target data of the node 6 includes the metadata of the node 6 and the node 6. The metadata of the node 6 includes the data size size2=24 and the offset offset2=32 of the target data of the node 6. The offset in the location information 2 is the same as the offset offset2 in the target data. The second device obtains the node 6 from the target data of the node 6 based on the data size size2 of the target data of the node 6.

For the location information 3 of the node 7, the location information 3 of the node 7 includes the identification information "ID2" of the data block shown in FIG. 10 and the offset 16 of the target data of the node 7 in the data block shown in FIG. 10. The target data of the node 7 is obtained, based on the offset 16, from the data block shown in FIG. 10. The target data of the node 7 includes the metadata of the node 7 and the node 7. The metadata of the node 7 includes the data size size4=24 and the offset offset4=16 of the target data of the node 7. The offset in the location information 3 is the same as the offset offset4 in the target data. The second device obtains the node 7 from the target data of the node 7 based on the data size size4 of the target data of the node 7.

For the location information 4 of the node 8, the location information 4 of the node 8 includes the identification information "ID2" of the data block shown in FIG. 10 and the offset 40 of the target data of the node 8 in the data block shown in FIG. 10. The target data of the node 8 is obtained, based on the offset 40, from the data block shown in FIG. 10. The target data of the node 8 includes the metadata of the node 8 and the node 8. The metadata of the node 8 includes the data size size5=32 and the offset offset5=40 of the target data of the node 8. The offset in the location information 4 is the same as the offset offset5 in the target data. The second device obtains the node 8 from the target data of the node 8 based on the data size size5 of the target data of the node 8.

For the location information 5 of the node 9, the location information 5 of the node 9 includes the identification information "ID2" of the data block shown in FIG. 10 and the offset 72 of the target data of the node 9 in the data block shown in FIG. 10. The target data of the node 9 is obtained, based on the offset 72, from the data block shown in FIG. 10. The target data of the node 9 includes the metadata of the node 9 and the node 9. The metadata of the node 9 includes the data size size6=40 and the offset offset6=72 of the target data of the node 9. The offset in the location information 5 is the same as the offset offset6 in the target data. The second device obtains the node 9 from the target data of the node 6 based on the data size size6 of the target data of the node 9.

In this way, the node 1, the node 2, the node 3, the node 4, the node 5, the node 6, the node 7, the node 8, and the node 9 in the object tree are obtained, and the nine nodes form one object tree.

In embodiments of this application, the first node is obtained. The first node is a non-leaf node included in the object tree. The target data of the first node is added to the first data block. The target data includes the location information of the second node (the child node of the first node), the metadata of the first node, and the first node, the metadata of the first node indicates the location of the first node in the data block, and the location information indicates the second data block in which the target data of the second node is located and the location of the target data in the second data block. When the data size of the first data block exceeds the data size threshold, the first data block is sent. Because the target data includes the location information of the child node of the first node, the metadata of the first node, and the first node, even if the nodes in the object tree are sent based on a plurality of data blocks, the object tree can be restored based on the plurality of data blocks. Therefore, the data block can be sent when the data size of the data block exceeds the data size threshold, to improve data block sending efficiency.

Refer to FIG. 12. An embodiment of this application provides a communication apparatus 1200. The apparatus 1200 is an apparatus included in the communication system 100 shown in FIG. 1, the communication system 100 further includes a second device, the apparatus 1200 and the second device both include first metadata, the first metadata is used to describe at least one data category, and the at least one data category is a data category to which a data value that is able to be sent by the apparatus 1200 to the second device belongs. The apparatus 1200 includes:
a processing unit 1201, further configured to obtain a first data block based on the first metadata, where the first data block includes a data value that belongs to the at least one data category; and
a sending unit 1202, configured to send the first data block to the second device, where the second device is configured to parse the first data block based on the first metadata, to obtain the data value.

Optionally, for a detailed implementation process of obtaining the first data block by the processing unit 1201, refer to related content in step 303 of the method 300 shown in FIG. 3. Details are not described herein again.

Optionally, for a detailed implementation process of sending the first data block by the sending unit 1202, refer to related content in step 304 of the method 300 shown in FIG. 3. Details are not described herein again.

Optionally, the first metadata is further used to describe arrangement of a data value that is able to be sent by the apparatus 1200 to the second device, and arrangement of a data value included in the first data block is the arrangement of the data value.

Optionally, the first metadata is metadata of the apparatus 1200, and the sending unit 1202 is further configured to send the first metadata to the second device.

Optionally, for a detailed implementation process of sending the first metadata by the sending unit 1202, refer to related content in step 301 of the method 300 shown in FIG. 3. Details are not described herein again.

Optionally, the first metadata is metadata of the second device, and the apparatus 1200 further includes:
a receiving unit 1203, configured to receive the first metadata from the second device.

Optionally, for a detailed implementation process of receiving the first metadata by the receiving unit 1203, refer to related content in step 301 of the method 300 shown in FIG. 3. Details are not described herein again.

Optionally, a quantity of the at least one data category is M, M is an integer greater than or equal to 1, the apparatus 1200 further includes second metadata, the second metadata is metadata of the apparatus 1200, the second metadata is used to describe N data categories, N is an integer greater than or equal to 1, and an intersection of the M data categories described by the first metadata and the N data categories includes Q data categories, where Q is an integer greater than or equal to 1, Q is less than or equal to N, and Q is less than or equal to M.

The processing unit 1201 is configured to:
obtain, based on the second metadata, N data values that belong to the N data categories; and
select, from the N data values based on the first metadata, Q data values that belong to the Q data categories, where the first data block includes M-Q default values that belong to M-Q data categories and the Q data values.

Optionally, for a detailed implementation process in which the processing unit 1201 obtains, based on the second metadata, the N data values that belong to the N data categories, refer to related content in step 302 of the method 300 shown in FIG. 3. Details are not described herein again.

Optionally, for a detailed implementation process in which the processing unit 1201 selects, from the N data values based on the first metadata, the Q data values that belong to the Q data categories, refer to related content in step 303 of the method 300 shown in FIG. 3. Details are not described herein again.

In this embodiment of this application, because the apparatus and the second device each include the first metadata, and the first metadata includes the at least one data category, the processing unit obtains the first data block based on the first metadata, the first data block includes at least one data value that belongs to the at least one data category, and the sending unit sends the first data block to the second device. In this way, because the first data block includes the at least one data value and does not need to include the first metadata, a data size of the first data block can be reduced. This improves efficiency of sending the first data block. In addition, because the first data block includes the at least one data value and does not need to include the first metadata, and the at least one data value does not need to be serialized. This reduces time for obtaining the first data block, and improves efficiency of sending the first data block.

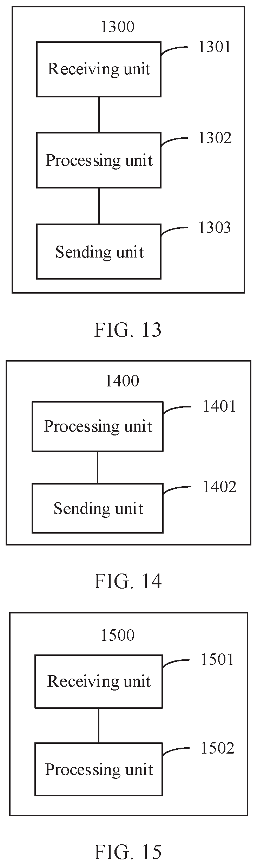

Refer to FIG. 13. An embodiment of this application provides a communication apparatus 1300. The apparatus 1300 may be an apparatus included in the communication system 100 shown in FIG. 1, the communication system 100 further includes a first device, the first device and the apparatus 1300 both include first metadata, the first metadata is used to describe at least one data category, the at least one data category is a data category to which a data value that is able to be sent by the first device to the apparatus 1300 belongs, and M is an integer greater than or equal to 1. The apparatus 1300 includes:
a receiving unit 1301, configured to receive a first data block, where the first data block includes a data value that belongs to the at least one data category; and
a processing unit 1302, configured to parse the first data block based on the first metadata, to obtain the data value.

Optionally, for a detailed implementation process of receiving the first data block by the receiving unit 1301, refer to related content in step 305 of the method 300 shown in FIG. 3. Details are not described herein again.

Optionally, for a detailed implementation process in which the processing unit 1302 parses the first data block based on the first metadata, to obtain the at least one data value, refer to related content in step 305 of the method 300 shown in FIG. 3. Details are not described herein again.

Optionally, the first metadata is further used to describe arrangement of a data value that is able to be sent by the first device to the apparatus 1300, and arrangement of a data value included in the first data block is the arrangement of the data value.

Optionally, the first metadata is metadata of the first device, and the receiving unit 1301 is further configured to receive the first metadata from the first device.

Optionally, for a detailed implementation process in which the receiving unit 1301 receives the first metadata from the first device, refer to related content in step 301 of the method 300 shown in FIG. 3. Details are not described herein again.

Optionally, the first metadata is metadata of the apparatus 1300, and the apparatus 1300 further includes:
a sending unit 1303, configured to send the first metadata to the first device.

Optionally, for a detailed implementation process in which the sending unit 1303 sends the first metadata to the first device, refer to related content in step 301 of the method 300 shown in FIG. 3. Details are not described herein again.

Optionally, a quantity of the at least one data category is M, M is an integer greater than or equal to 1, the first device further includes second metadata, the second metadata is metadata of the first device, the second metadata is used to describe N data categories, N is an integer greater than or equal to 1, an intersection of the M data categories described by the first metadata and the N data categories includes Q data categories, Q is an integer greater than or equal to 1, Q is less than or equal to N, Q is less than or equal to M, the first data block includes default values that belong to M-Q data categories and the Q data values, and the M-Q data categories are data categories other than the Q data categories in the M data categories.

In this embodiment of this application, because the first device and the apparatus each include the first metadata, and the first metadata includes the at least one data category, the first data block sent by the first device includes the at least one data value that belongs to the at least one data category. In this way, because the first data block includes the at least one data value and does not need to include the first metadata, a data size of the first data block can be reduced. This improves efficiency of sending the first data block by the first device. In addition, because the first data block includes the at least one data value and does not need to include the first metadata, the first device does not need to serialize the at least one data value, and the apparatus does not need to deserialize the first data block. This reduces time for the first device to obtain the first data block, improves efficiency of sending the first data block by the first device, and improves efficiency of parsing the first data block by the processing unit.

Refer to FIG. 14. An embodiment of this application provides a communication apparatus 1400. The apparatus 1400 includes an object tree, and may be deployed on the first device in the communication system 100 shown in FIG. 1. The apparatus 1400 includes:
a processing unit 1401, configured to obtain a first node, where the first node is a non-leaf node included in the object tree, the object tree further includes a second node, and the second node is a child node of the first node, where
the processing unit 1401 is further configured to add first target data to a first data block, where the first target data includes location information of the second node, metadata of the first node, and the first node, the metadata of the first node indicates a location of the first node in the first data block, the location information indicates a location of second target data in a second data block, the second target data includes metadata of the second node and the second node, and the second data block is a data block in which the second target data is located; and
a sending unit 1402, configured to: when a data size of the first data block exceeds a data size threshold, send the first data block.

Optionally, for a detailed implementation process of obtaining the first node by the processing unit 1401, refer to related content in step 801 of the method 800 shown in FIG. 8. Details are not described herein again.

Optionally, for a detailed implementation process in which the processing unit 1401 adds the first target data to the first data block, refer to related content in step 802 of the method 800 shown in FIG. 8. Details are not described herein again.

Optionally, for a detailed implementation process of sending the first data block by the sending unit 1402, refer to related content in step 803 of the method 800 shown in FIG. 8. Details are not described herein again.

Optionally, the processing unit 1401 is further configured to: when the data size of the first data block does not exceed the data size threshold, obtain a third node, where the third node is a sibling node or a parent node of the first node; and add third target data to the first data block, where the third target data includes metadata of the third node and the third node.

The sending unit 1402 is configured to: when the data size of the first data block exceeds the data size threshold, send the first data block.

Optionally, for a detailed implementation process of obtaining the third node by the processing unit 1401, refer to related content in step 803 of the method 800 shown in FIG. 8. Details are not described herein again.

Optionally, for a detailed implementation process of sending the first data block by the sending unit 1402, refer to related content in step 803 of the method 800 shown in FIG. 8. Details are not described herein again.

Optionally, the metadata of the first node includes one or more of the following information: a data size of the first target data or an offset of the first target data in the first data block.

Optionally, the location information includes one or more of the following information: identification information of the second data block, or an offset of the second target data in the second data block.

Optionally, the first data block includes a block header and a payload part, the block header includes the data size of the first data block, and the payload part includes the first target data.

Optionally, the first node is a root node in the object tree, the block header further includes an offset of the first target data in the first data block.

Optionally, the processing unit 1401 is further configured to obtain a fourth node, where the fourth node is a node that is not sent in the object tree.

The processing unit 1401 is further configured to construct a third data block, where a data size of a payload part in the third data block is 0.

The processing unit 1401 is further configured to add fourth target data to the payload part in the third data block, where the fourth target data includes metadata of the fourth node and the fourth node.

The sending unit 1402 is configured to: when the data size of the third data block exceeds the data size threshold, send the third data block.

Optionally, for a detailed implementation process in which the processing unit 1401 obtains the fourth node, constructs the third data block, and adds the fourth target data to the payload part in the third data block, refer to related content in step 803 of the method 800 shown in FIG. 8. Details are not described herein again.

Optionally, for a detailed implementation process of sending the third data block by the sending unit 1402, refer to related content in step 803 of the method 800 shown in FIG. 8. Details are not described herein again.

In this embodiment of this application, because the first target data includes the location information of the second node, and the location information indicates the location of the second target data of the second node in the second data block, so that the second device can obtain the second node from the second data block based on the location information. Therefore, the sending unit may send the object tree based on a plurality of data blocks. In this way, when the data size of the first data block exceeds the data size threshold, the sending unit may send the first data block. After the first data block is sent, a next data block may be obtained, and then the next data block is sent. In comparison with a manner in which data blocks including an entire object tree are obtained and then the data blocks including the entire object tree are sent, time required for obtaining the data blocks including the entire object tree is far greater than time required for obtaining the first data block, so that the first data block is sent when the data size of the first data block exceeds the data size threshold. This improves data sending efficiency.

Refer to FIG. 15. An embodiment of this application provides a communication apparatus 1500. The apparatus 1500 is an apparatus included in the communication system 100 shown in FIG. 1, and the communication system 100 further includes a first device, the first device includes an object tree, the object tree includes a first node and a second node, and the second node is a child node of the first node. The apparatus 1500 includes:
a receiving unit 1501, configured to receive at least one data block sent by the first device, where the at least one data block includes a first data block, the first data block includes first target data, the first target data includes location information of the second node, metadata of the first node, and the first node, the metadata of the first node indicates a location of the first node in the first data block, the location information indicates a location of second target data in a second data block, the second target data includes metadata of the second node and the second node, the second data block is a data block in which the second target data is located, and the first data block is the second data block; or the at least one data block further includes a second data block, and the second data block is a data block sent before the first device sends the first data block; and
a processing unit 1502, configured to obtain the object tree based on the at least one data block.

Optionally, for a detailed implementation process in which the receiving unit 1501 receives the at least one data block from the first device, refer to related content in step 804 of the method 800 shown in FIG. 8. Details are not described herein again.

Optionally, for a detailed implementation process in which the processing unit 1502 obtains the object tree based on the at least one data block, refer to related content in step 804 of the method 800 shown in FIG. 8. Details are not described herein again.

Optionally, the metadata of the first node includes one or more of the following information: a data size of the first target data or an offset of the first target data in the first data block.

Optionally, the location information includes one or more of the following information: identification information of the second data block, or an offset of the second target data in the second data block.

Optionally, the first node is a root node in the object tree, the first data block includes a block header and a payload part, the payload part includes the first target data, and the block header further includes the offset of the first target data in the first data block.

The processing unit 1502 is configured to:
obtain the first target data from the first data block based on the offset included in the block header;
obtain the first node and the location information based on the first target data;
obtain the second target data from the second data block based on the location information; and
obtain the second node based on the second target data.

Optionally, for a detailed implementation process in which the processing unit 1502 obtains the first target data from the first data block, refer to related content in step 804 of the method 800 shown in FIG. 8. Details are not described herein again.

Optionally, for a detailed implementation process of obtaining the first node and the location information by the processing unit 1502, refer to related content in step 804 of the method 800 shown in FIG. 8. Details are not described herein again.

Optionally, for a detailed implementation process in which the processing unit 1502 obtains the second target data from the second data block, refer to related content in step 804 of the method 800 shown in FIG. 8. Details are not described herein again.

Optionally, for a detailed implementation process in which the processing unit 1502 obtains the second node based on the second target data, refer to related content in step 804 of the method 800 shown in FIG. 8. Details are not described herein again.

In this embodiment of this application, because the first target data includes the location information of the second node, and the location information indicates the location of the second target data of the second node in the second data block, so that the processing unit can obtain the second node from the second data block based on the location information. Therefore, the first device may send the object tree based on a plurality of data blocks. In this way, when a data size of the first data block exceeds a data size threshold, the first device may send the first data block. After the first data block is sent, a next data block may be obtained, and then the next data block is sent. In comparison with a manner in which data blocks including an entire object tree are obtained and then the data blocks including the entire object tree are sent, time required for obtaining the data blocks including the entire object tree is far greater than time required for obtaining the first data block, so that the first device sends the first data block when the data size of the first data block exceeds the data size threshold. This improves data sending efficiency of the first device.

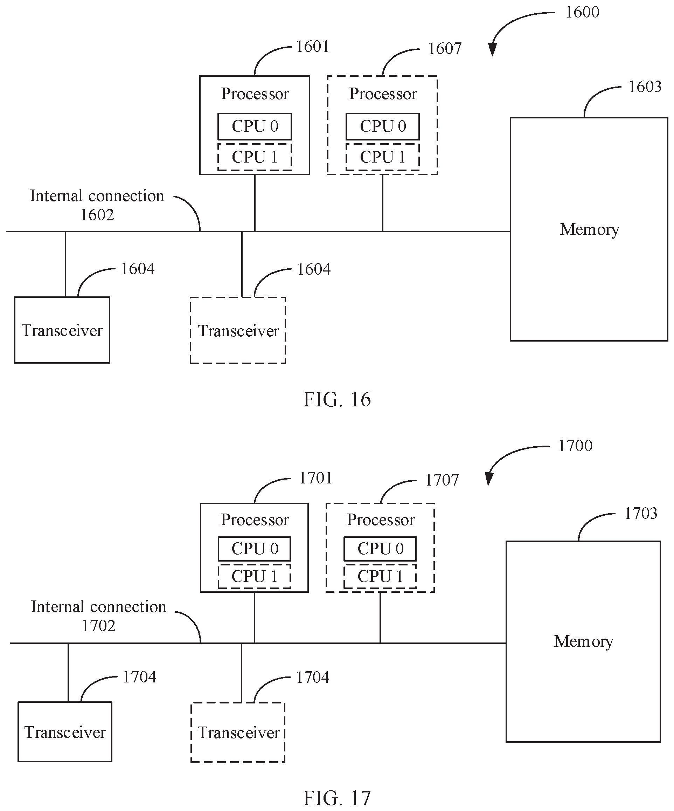

FIG. 16 is a diagram of communication apparatus 1600 according to an embodiment of this application. The apparatus 1600 may be the first device in any one of the foregoing embodiments. For example, the apparatus 1600 may be the first device in the communication network 100 shown in FIG. 1, the first device in the method 300 shown in FIG. 3, or the first device in the method 800 shown in FIG. 8. The apparatus 1600 includes at least one processor 1601, an internal connection 1602, a memory 1603, and at least one transceiver 1604.

The apparatus 1600 is an apparatus of a hardware structure, and may be configured to implement the functional module in the apparatus 1200 in FIG. 12 or implement the functional module in the apparatus 1400 in FIG. 14.

For example, a person skilled in the art may figure out that the processing unit 1201 in the apparatus 1200 shown in FIG. 12 may be implemented by the at least one processor 1601 by invoking code in the memory 1603, and the sending unit 1202 and the receiving unit 1203 in the apparatus 1200 shown in FIG. 12 may be implemented by the at least one transceiver 1604.

For another example, a person skilled in the art may figure out that the processing unit 1401 in the apparatus 1400 shown in FIG. 14 may be implemented by the at least one processor 1601 by invoking code in the memory 1603, and the sending unit 1402 in the apparatus 1400 shown in FIG. 14 may be implemented by the at least one transceiver 1604.

The apparatus 1600 may be further configured to implement a function of the first device in any one of the foregoing embodiments.

The processor 1601 may be a general-purpose central processing unit (central processing unit, CPU), a network processor (network processor, NP), a microprocessor, an application-specific integrated circuit (application-specific integrated circuit, ASIC), or one or more integrated circuits for controlling program execution of the solutions of this application.

The internal connection 1602 may include a path for transmitting information between the foregoing components. The internal connection 1602 may be a board, a bus, or the like.

The at least one transceiver 1604 is configured to communicate with another device or a communication network.

The memory 1603 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through the bus. The memory may alternatively be integrated with the processor.

The memory 1603 is configured to store application program code for executing the solutions in this application, and the processor 1601 controls the execution. The processor 1601 is configured to execute the application program code stored in the memory 1603, and cooperate with the at least one transceiver 1604, so that the apparatus 1600 implements functions in the method in this patent.

During specific implementation, in an embodiment, the processor 1601 may include one or more CPUs, for example, a CPU 0 and a CPU 1 in FIG. 16.

During specific implementation, in an embodiment, the apparatus 1600 may include a plurality of processors, for example, the processor 1601 and a processor 1607 shown in FIG. 16. Each of the processors may be a single-core processor (single-CPU) or a multi-core processor (multi-CPU). The processor herein may be one or more devices, circuits, and/or processing cores configured to process data (for example, computer program instructions).

FIG. 17 is a diagram of communication apparatus 1700 according to an embodiment of this application. The apparatus 1700 may be the second device in any one of the foregoing embodiments. For example, the apparatus 1700 may be the second device in the communication network 100 shown in FIG. 1, the second device in the method 300 shown in FIG. 3, or the second device in the method 800 shown in FIG. 8. The apparatus 1700 includes at least one processor 1701, an internal connection 1702, a memory 1703, and at least one transceiver 1704.

The apparatus 1700 is an apparatus of a hardware structure, and may be configured to implement the functional module in the apparatus 1300 in FIG. 13 or implement the functional module in the apparatus 1500 in FIG. 15.

For example, a person skilled in the art may figure out that the processing unit 1302 in the apparatus 1300 shown in FIG. 13 may be implemented by the at least one processor 1701 by invoking code in the memory 1703, and the receiving unit 1301 and the sending unit 1303 in the apparatus 1300 shown in FIG. 13 may be implemented by the at least one transceiver 1704.

For another example, a person skilled in the art may figure out that the processing unit 1502 in the apparatus 1500 shown in FIG. 15 may be implemented by the at least one processor 1701 by invoking code in the memory 1703, and the receiving unit 1501 in the apparatus 1500 shown in FIG. 15 may be implemented by the at least one transceiver 1704.

The apparatus 1700 may be further configured to implement a function of the second device in any one of the foregoing embodiments.

The processor 1701 may be a general-purpose central processing unit (central processing unit, CPU), a network processor (network processor, NP), a microprocessor, an application-specific integrated circuit (application-specific integrated circuit, ASIC), or one or more integrated circuits for controlling program execution of the solutions of this application.

The internal connection 1702 may include a path for transmitting information between the foregoing components. The internal connection 1702 may be a board, a bus, or the like.

The at least one transceiver 1704 is configured to communicate with another device or a communication network.

The memory 1703 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through the bus. The memory may alternatively be integrated with the processor.

The memory 1703 is configured to store application program code for executing the solutions in this application, and the processor 1701 controls the execution. The processor 1701 is configured to execute the application program code stored in the memory 1703, and cooperate with the at least one transceiver 1704, so that the apparatus 1700 implements functions in the method in this patent.

During specific implementation, in an embodiment, the processor 1701 may include one or more CPUs, for example, a CPU 0 and a CPU 1 in FIG. 17.

During specific implementation, in an embodiment, the apparatus 1700 may include a plurality of processors, for example, the processor 1701 and a processor 1707 shown in FIG. 17. Each of the processors may be a single-core processor (single-CPU) or a multi-core processor (multi-CPU). The processor herein may be one or more devices, circuits, and/or processing cores configured to process data (for example, computer program instructions).

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made without departing from the principle of this application should fall within the protection scope of this application.

## Claims

1. A communication system, wherein the communication system comprises a first device and a second device, the first device and the second device both comprise first metadata, the first metadata is used to describe at least one data category, and the at least one data category is a data category to which a data value that is able to be sent by the first device to the second device belongs;
the first device is configured to obtain a first data block based on the first metadata, wherein the first data block comprises a data value that belongs to the at least one data category;
the first device is further configured to send the first data block to the second device; and
the second device is configured to parse the first data block based on the first metadata, to obtain the data value.

2. The system according to claim 1, wherein the first metadata is further used to describe arrangement of a data value that is able to be sent by the first device to the second device, and arrangement of a data block value comprised in the first data block is the arrangement of the data value.

3. The system according to claim 1 or 2, wherein the first metadata is metadata of the first device, and the first device is further configured to send the first metadata to the second device; and
the second device is further configured to receive the first metadata.

4. The system according to claim 1 or 2, wherein the first metadata is metadata of the second device, and the second device is further configured to send the first metadata to the first device; and
the first device is further configured to receive the first metadata.

5. The system according to claim 4, wherein a quantity of the at least one data category is M, M is an integer greater than or equal to 1, the first device further comprises second metadata, the second metadata is metadata of the first device, the second metadata is used to describe N data categories, N is an integer greater than or equal to 1, and an intersection of the M data categories described by the first metadata and the N data categories comprises Q data categories, wherein Q is an integer greater than or equal to 1, Q is less than or equal to N, and Q is less than or equal to M;
the first device is further configured to obtain, based on the second metadata, N data values that belong to the N data categories; and
the first device is further configured to select, from the N data values based on the first metadata, Q data values that belong to the Q data categories, wherein the first data block comprises M-Q default values that belong to M-Q data categories and the Q data values, and the M-Q data categories are data categories other than the Q data categories in the M data categories.

6. A communication method, wherein the method is applied to a first device in a communication system, the communication system further comprises a second device, the first device and the second device both comprise first metadata, the first metadata is used to describe at least one data category, the at least one data category is a data category to which a data value that is able to be sent by the first device to the second device belongs, and the method comprises:
obtaining, by the first device, a first data block based on the first metadata, wherein the first data block comprises a data value that belongs to the at least one data category; and
sending, by the first device, the first data block to the second device, wherein the second device is configured to parse the first data block based on the first metadata, to obtain the data value.

7. The method according to claim 6, wherein the first metadata is metadata of the first device, and before the obtaining, by the first device, the first data block based on the first metadata, the method further comprises:
sending, by the first device, the first metadata to the second device.

8. The method according to claim 6, wherein the first metadata is metadata of the second device, and before the obtaining, by the first device, the first data block based on the first metadata, the method further comprises:
receiving, by the first device, the first metadata from the second device.

9. The method according to claim 8, wherein a quantity of the at least one data category is M, M is an integer greater than or equal to 1, the first device further comprises second metadata, the second metadata is metadata of the first device, the second metadata is used to describe N data categories, N is an integer greater than or equal to 1, and an intersection of the M data categories described by the first metadata and the N data categories comprises Q data categories, wherein Q is an integer greater than or equal to 1, Q is less than or equal to N, and Q is less than or equal to M; and the method further comprises:
obtaining, by the first device based on the second metadata, N data values that belong to the N data categories; and
the obtaining the first data block based on the first metadata comprises:
selecting, by the first device from the N data values based on the first metadata, Q data values that belong to the Q data categories, wherein the first data block comprises M-Q default values that belong to M-Q data categories and the Q data values, and the M-Q data categories are data categories other than the Q data categories in the M data categories.

10. A communication method, wherein the method is applied to a second device in a communication system, the communication system further comprises a first device, the first device and the second device both comprise first metadata, the first metadata is used to describe at least one data category, the at least one data category is a data category to which a data value that is able to be sent by the first device to the second device belongs, and the method comprises:
receiving, by the second device, a first data block, wherein the first data block comprises a data value that belongs to the at least one data category; and
parsing, by the second device, the first data block based on the first metadata, to obtain the data value.

11. The method according to claim 10, wherein the first metadata is metadata of the first device, and before receiving, by the second device, the first data block, the method further comprises:
receiving, by the second device, the first metadata from the first device.

12. The method according to claim 10, wherein the first metadata is metadata of the second device, and before receiving, by the second device, the first data block, the method further comprises:
sending, by the second device, the first metadata to the first device.

13. The method according to claim 12, wherein a quantity of the at least one data category is M, M is an integer greater than or equal to 1, the first device further comprises second metadata, the second metadata is metadata of the first device, the second metadata is used to describe N data categories, N is an integer greater than or equal to 1, an intersection of the N data categories and the M data categories comprises Q data categories, Q is an integer greater than or equal to 1, Q is less than or equal to N, Q is less than or equal to M, the first data block comprises M-Q default values that belong to M-Q data categories and Q data values that belong to the Q data categories, and the M-Q data categories are data categories other than the Q data categories in the M data categories.

14. A communication method, wherein the method is applied to a first device, the first device comprises an object tree, and the method comprises:
obtaining a first node, wherein the first node is a non-leaf node comprised in the object tree, the object tree further comprises a second node, and the second node is a child node of the first node;
adding first target data to a first data block, wherein the first target data comprises location information of the second node, metadata of the first node, and the first node, the metadata of the first node indicates a location of the first node in the first data block, the location information indicates a location of second target data in a second data block, the second target data comprises metadata of the second node and the second node, and the second data block is a data block in which the second target data is located; and
when a data size of the first data block exceeds a data size threshold, sending the first data block.

15. The method according to claim 14, wherein the method further comprises:
when the data size of the first data block does not exceed the data size threshold, obtaining a third node, wherein the third node is a sibling node or a parent node of the first node;
adding third target data to the first data block, wherein the third target data comprises metadata of the third node and the third node; and
when the data size of the first data block exceeds the data size threshold, sending the first data block.

16. The method according to claim 14 or 15, wherein the metadata of the first node comprises one or more of the following information: a data size of the first target data or an offset of the first target data in the first data block.

17. The method according to any one of claims 14 to 16, wherein the location information comprises one or more of the following information: identification information of the second data block or an offset of the second target data in the second data block.

18. The method according to any one of claims 14 to 17, wherein the first data block comprises a block header and a payload part, the block header comprises the data size of the first data block, and the payload part comprises the first target data.

19. The method according to claim 18, wherein the first node is a root node in the object tree, and the block header further comprises the offset of the first target data in the first data block.

20. The method according to any one of claims 14 to 18, wherein after the sending the first data block, the method further comprises:
obtaining a fourth node, wherein the fourth node is a node that is not sent in the object tree;
constructing a third data block, wherein a data size of a payload part in the third data block is 0; and
adding fourth target data to the payload part in the third data block, wherein the fourth target data comprises metadata of the fourth node and the fourth node; and
when a data size of the third data block exceeds the data size threshold, sending the third data block.

21. A communication apparatus, wherein the apparatus is an apparatus in a communication system, the communication system further comprises a second device, the apparatus and the second device both comprise first metadata, the first metadata is used to describe at least one data category, the at least one data category is a data category to which a data value that is able to be sent by the apparatus to the second device belongs, and the apparatus comprises:
a processing unit, further configured to obtain a first data block based on the first metadata, wherein the first data block comprises a data value that belongs to the at least one data category; and
a sending unit, configured to send the first data block to the second device, wherein the second device is configured to parse the first data block based on the first metadata, to obtain the data value.

22. The apparatus according to claim 21, wherein the first metadata is metadata of the apparatus, and the sending unit is further configured to send the first metadata to the second device.

23. The apparatus according to claim 21, wherein the first metadata is metadata of the second device, and the apparatus further comprises:
a receiving unit, configured to receive the first metadata from the second device.

24. The apparatus according to claim 23, wherein a quantity of the at least one data category is M, M is an integer greater than or equal to 1, the apparatus further comprises second metadata, the second metadata is metadata of the apparatus, the second metadata is used to describe N data categories, N is an integer greater than or equal to 1, and an intersection of the M data categories described by the first metadata and the N data categories comprises Q data categories, wherein Q is an integer greater than or equal to 1, Q is less than or equal to N, and Q is less than or equal to M; and
the processing unit is configured to:
obtain, based on the second metadata, N data values that belong to the N data categories; and
select, from the N data values based on the first metadata, Q data values that belong to the Q data categories, wherein the first data block comprises M-Q default values that belong to M-Q data categories and the Q data values, and the M-Q data categories are data categories other than the Q data categories in the M data categories.

25. A communication apparatus, wherein the apparatus is an apparatus comprised in a communication system, the communication system further comprises a first device, the first device and the apparatus both comprise first metadata, the first metadata is used to describe at least one data category, the at least one data category is a data category to which a data value that is able to be sent by the first device to the apparatus belongs, and the apparatus comprises:
a receiving unit, configured to receive a first data block, wherein the first data block comprises a data value that belongs to the at least one data category; and
a processing unit, configured to parse the first data block based on the first metadata, to obtain the data value.

26. The apparatus according to claim 25, wherein the first metadata is metadata of the first device, and the receiving unit is further configured to receive the first metadata from the first device.

27. The apparatus according to claim 25, wherein the first metadata is metadata of the apparatus, and the apparatus further comprises:
a sending unit, configured to send the first metadata to the first device.

28. The apparatus according to claim 27, wherein a quantity of the at least one data category is M, M is an integer greater than or equal to 1, the first device further comprises second metadata, the second metadata is metadata of the first device, the second metadata is used to describe N data categories, N is an integer greater than or equal to 1, an intersection of the N data categories and the M data categories described by the first metadata comprises Q data categories, Q is an integer greater than or equal to 1, Q is less than or equal to N, Q is less than or equal to M, the first data block comprises M-Q default values that belong to M-Q data categories and Q data values that belong to the Q data categories, and the M-Q data categories are data categories other than the Q data categories in the M data categories.

29. A communication apparatus, wherein the apparatus comprises an object tree, and comprises:
a processing unit, configured to obtain a first node, wherein the first node is a non-leaf node comprised in the object tree, the object tree further comprises a second node, and the second node is a child node of the first node, wherein
the processing unit is further configured to add first target data to a first data block, wherein the first target data comprises location information of the second node, metadata of the first node, and the first node, the metadata of the first node indicates a location of the first node in the first data block, the location information indicates a location of second target data in a second data block, the second target data comprises metadata of the second node and the second node, and the second data block is a data block in which the second target data is located; and
a sending unit, configured to: when a data size of the first data block exceeds a data size threshold, send the first data block.

30. The apparatus according to claim 29, wherein
the processing unit is further configured to: when the data size of the first data block does not exceed the data size threshold, obtain a third node, wherein the third node is a sibling node or a parent node of the first node; and add third target data to the first data block, wherein the third target data comprises metadata of the third node and the third node; and
the sending unit is configured to: when the data size of the first data block exceeds the data size threshold, send the first data block.

31. The apparatus according to claim 29 or 30, wherein the metadata of the first node comprises one or more of the following information: a data size of the first target data or an offset of the first target data in the first data block.

32. The apparatus according to any one of claims 29 to 31, wherein the location information comprises one or more of the following information: identification information of the second data block or an offset of the second target data in the second data block.

33. The apparatus according to any one of claims 29 to 32, wherein the first data block comprises a block header and a payload part, the block header comprises the data size of the first data block, and the payload part comprises the first target data.

34. The apparatus according to claim 33, wherein the first node is a root node in the object tree, and the block header further comprises the offset of the first target data in the first data block.

35. The apparatus according to any one of claims 29 to 33, wherein
the processing unit is further configured to obtain a fourth node, wherein the fourth node is a node that is not sent in the object tree;
the processing unit is further configured to construct a third data block, wherein a data size of a payload part in the third data block is 0;
the processing unit is further configured to add fourth target data to the payload part in the third data block, wherein the fourth target data comprises metadata of the fourth node and the fourth node; and
the sending unit is further configured to: when the data size of the third data block exceeds the data size threshold, send the third data block.

36. A communication device, comprising at least one processor and at least one memory, wherein the at least one memory stores computer-readable instructions, and the at least one processor executes the computer-readable instructions, to enable the device to perform the method according to any one of claims 6 to 20.

37. A computer storage medium, storing a computer program, wherein when the computer program is executed by a processor, the method according to any one of claims 6 to 20 is implemented.

38. A computer program product, comprising a computer program, wherein when the computer program is executed by a processor, the method according to any one of claims 6 to 20 is implemented.
